(19) Europäisches Patentamt / European Patent Office / Office européen des brevets

(11) **EP 4 383 772 A1**

(12) **EUROPEAN PATENT APPLICATION**
published in accordance with Art. 153(4) EPC

(43) Date of publication:
**12.06.2024 Bulletin 2024/24**

(21) Application number: **22852633.1**

(22) Date of filing: **18.05.2022**

(51) International Patent Classification (IPC):
**H04W 8/22** *(2009.01)* **H04W 72/04** *(2023.01)*

(52) Cooperative Patent Classification (CPC):
**H04W 8/22; H04W 72/04**

(86) International application number:
**PCT/JP2022/020728**

(87) International publication number:
**WO 2023/013204 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2021 JP 2021129188**

(71) Applicant: **Panasonic Intellectual Property Corporation of America**
**Torrance, CA 90504 (US)**

(72) Inventors:
• **MAKI, Shotaro**
  **Kadoma-shi**
  **Osaka 571-0057 (JP)**
• **YAMAMOTO, Tetsuya**
  **Kadoma-shi**
  **Osaka 571-0057 (JP)**
• **HORIUCHI, Ayako**
  **Kadoma-shi**
  **Osaka 571-0057 (JP)**
• **NISHIO, Akihiko**
  **Kadoma-shi**
  **Osaka 571-0057 (JP)**
• **SUZUKI, Hidetoshi**
  **Kadoma-shi**
  **Osaka 571-0057 (JP)**

(74) Representative: **Grünecker Patent- und Rechtsanwälte**
**PartG mbB**
**Leopoldstraße 4**
**80802 München (DE)**

(54) **TERMINAL, BASE STATION, AND COMMUNICATION METHOD**

(57) This terminal comprises: a control circuit that, on the basis of information related to the setting of a first resource to a terminal of a first type, sets a second resource which is different from the first resource to a terminal of a second type; and a transmission circuit that transmits a signal in the second resource.

FIG. 5

EP 4 383 772 A1

**Description**

Technical Field

The present disclosure relates to a terminal, a base station, and a communication method.

Background Art

A communication system called the 5th generation mobile communication system (5G) has been studied. The 3rd Generation Partnership Project (3GPP), which is an international standards-developing organization, has been studying development of the 5G communication system in terms of both the development of LTE/LTE-Advanced systems and a New Radio Access Technology (also referred to as New RAT or NR), which is a new method not necessarily backward compatible with the LTE/LTE-Advanced systems (see, e.g., Non Patent Literature (hereinafter referred to as "NPL") 1).

Citation List

Non Patent Literature

NPL 1
RP-181726, "Revised WID on New Radio Access Technology," NTT DOCOMO, September 2018
NPL 2
RP-193238, "New SID on Support of Reduced Capability NR Devices," Ericsson, December 2019
NPL 3
3GPP TS 38.213 V16.6.0, "NR; Physical layer procedures for control (Release 16)," 2021-06

Summary of Invention

However, there is scope for study on a method for enhancing the efficiency of resource allocation for a terminal.
A non-limiting embodiment of the present disclosure facilitates providing a terminal, a base station, and a communication method each capable of enhancing the efficiency of resource allocation for a terminal.
A terminal according to an embodiment of the present disclosure includes: control circuitry, which, in operation, configures, based on information on a configuration of a first resource for a first type terminal, a second resource different from the first resource for a second type terminal; and reception circuitry, which, in operation, receives a signal in the second resource.
It should be noted that general or specific embodiments may be implemented as a system, an apparatus, a method, an integrated circuit, a computer program, a storage medium, or any selective combination thereof.
According to an embodiment of the present disclosure, it is possible to enhance the efficiency of resource allocation for a terminal.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an exemplary Physical Uplink Control Channel (PUCCH) resource set;
FIG. 2 illustrates an exemplary configuration of a cell-specific PUCCH resource;
FIG. 3 illustrates an exemplary configuration of a PUCCH resource;
FIG. 4 illustrates an exemplary configuration of a PUCCH resource and a Physical Uplink Shared Channel (PUSCH) resource;
FIG. 5 is a block diagram illustrating an exemplary configuration of a part of a base station;
FIG. 6 is a block diagram illustrating an exemplary configuration of a part of a terminal;
FIG. 7 is a block diagram illustrating an exemplary configuration of the base station;

FIG. 8 is a block diagram illustrating an exemplary configuration of the terminal;

FIG. 9 is a sequence diagram illustrating an exemplary operation of the base station and the terminal according to Operation Example 1;

FIG. 10 illustrates an exemplary configuration of a PUCCH resource according to Operation Example 1;

FIG. 11 illustrates an exemplary configuration of a PUCCH resource according to Operation Example 2;

FIG. 12 illustrates an exemplary configuration of a PUCCH resource;

FIG. 13 illustrates an exemplary PUCCH resource set;

FIG. 14 illustrates another exemplary PUCCH resource set;

FIG. 15 illustrates an exemplary architecture of a 3GPP NR system;

FIG. 16 schematically illustrates a functional split between NG-RAN and 5GC;

FIG. 17 is a sequence diagram of a Radio Resource Control (RRC) connection setup/reconfiguration procedure;

FIG. 18 is a schematic diagram illustrating a usage scenario of an enhanced Mobile BroadBand (eMBB), massive Machine Type Communications (mMTC), and Ultra Reliable and Low Latency Communications (URLLC); and

FIG. 19 is a block diagram illustrating an exemplary 5G system architecture for a non-roaming scenario.

Description of Embodiments

Hereinafter, embodiments of the present disclosure will be described in detail with reference to the accompanying drawings.

Note that, in the following description, a radio frame, a slot, and a symbol are, for example, each a physical resource unit in a time domain, for example. For example, the length of one frame may be 10 milliseconds. For example, one frame may be configured by a plurality (e.g., 10, 20, or another value) of slots. Further, for example, the number of slots configuring one frame may be variable depending on the slot length. Furthermore, for example, one slot may be configured by a plurality (e.g., 14 or 12) of symbols. For example, one symbol is the smallest physical resource unit in the time domain, and the symbol length may vary depending on the subcarrier spacing (SCS).

Further, a subcarrier and a resource block (RB) are each a physical resource unit in a frequency domain. For example, one resource block may be configured by 12 subcarriers. For example, one subcarrier may be the smallest physical resource unit in the frequency domain. The subcarrier spacing is variable, and may be 15 kHz, 30 kHz, 60 kHz, 120 kHz, 240 kHz, or another value.

[Regarding Cell-specific PUCCH]

For example, when no dedicated (individual or UE-specific) configuration is provided to a terminal (e.g., mobile station or User Equipment (UE)) of NR, the terminal may use an uplink control channel (e.g., PUCCH) resource set that is based on a cell-specific configuration (e.g., see NPL 3).

For example, the terminal in an initial connection stage may transmit, after receiving a signal (e.g., contention resolution identity (Message 4)) transmitted in a downlink shared channel (e.g., physical downlink shared channel (PDSCH) or downlink data channel) resource, the success or failure (Hybrid Automatic Retransmission Request - Acknowledgement (HARQ-ACK) or Negative ACK, NACK) of reception of the signal to a base station using a PUCCH resource. At this time, when no dedicated configuration of PUCCH is provided to the terminal, the terminal may, for example, use a PUCCH resource included in a cell-specific PUCCH resource set configured by system information to transmit a HARQ-ACK.

Note that the cell-specific PUCCH resource set may be referred to as a "PUCCH resource set before dedicated PUCCH resource configuration."

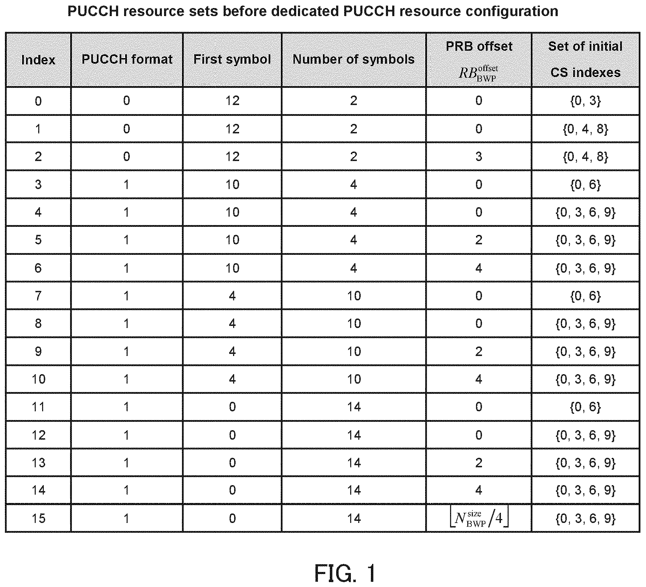

FIG. 1 illustrates exemplary parameters for the cell-specific PUCCH resource set that is based on a cell-specific configuration. In FIG. 1, index values ranging from 0 to 15 are each associated with parameters for a PUCCH resource set, such as PUCCH format, first symbol, number of symbols (e.g., duration), PRB offset, set of initial Cyclic Shift (CS) indexes.

For example, the terminal acquires information on any of indexes ranging from 0 to 15 by the cell-specific configuration. The terminal may, for example, identify the index based on the acquired information and determine a PUCCH resource set (e.g., PUCCH format, first symbol, number of symbols, PRB offset ($RB_{BWP}^{offset}$), and set of initial CS indexes, which are specified by a row corresponding to the index) associated with the index illustrated in FIG. 1.

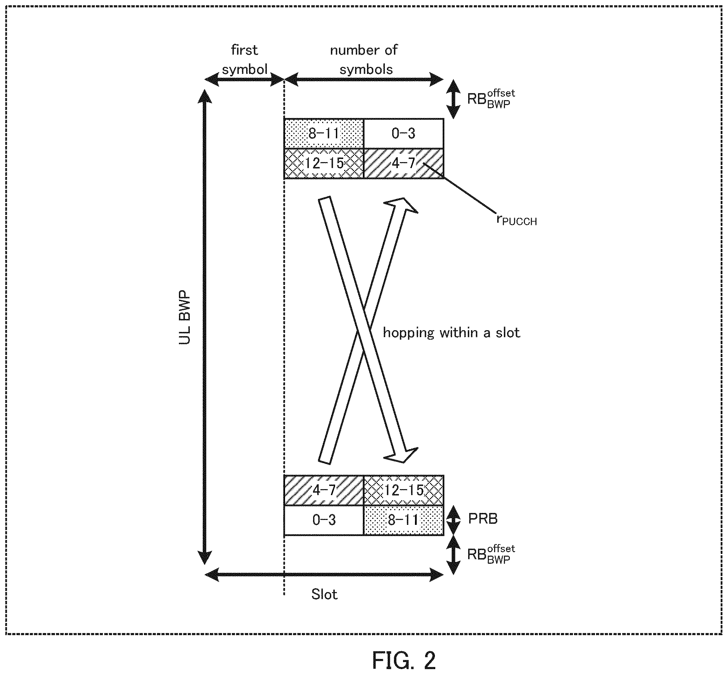

As an example, FIG. 2 illustrates an exemplary cell-specific PUCCH resource set when the terminal acquires index=8 by the cell-specific configuration. For example, as illustrated in FIG. 1, the terminal may configure PUCCH format 1, first symbol=4, number of symbols=10, PRB offset=0, set of initial CS indexes={0, 3, 6, 9} as parameters associated with index=8.

As illustrated in FIG. 2, a time resource of cell-specific PUCCH is configured in the "number of symbols" obtained by excluding the number of "first symbols" from the beginning of a certain slot. Further, as illustrated in FIG. 2, a frequency resource of cell-specific PUCCH may be over a plurality of physical resource blocks (PRBs). Further, the PRBs are respectively located in frequencies apart from the edges of a band included in an uplink bandwidth part (BWP) by "PRB offset ($RB_{BWP}^{offset}$)" PRBs.

Note that, as illustrated in FIG. 2, a method of switching PRBs per time to transmit is sometimes referred to as "frequency-hopping."

Further, as illustrated in FIG. 2, for a parameter called "$r_{PUCCH}$," a value (e.g., a different value) may be individually set for each terminal. The terminal may perform transmission using one PUCCH resource of the determined PUCCH resource set based on the indicated value of $r_{PUCCH}$ (e.g., any of 0 to 15). For example, a plurality of terminals may use different PUCCH resources. For example, when $r_{PUCCH}$=0, 1, 2, or 3 is indicated, the terminal may use a PUCCH resource of "0-3" illustrated in FIG. 2. Note that when the same resource in the time-frequency domain is allocated, the PUCCHs may be multiplexed by a cyclic shift (CS) of a transmission sequence.

Note that the value of $r_{PUCCH}$ may be determined based on the number of control channel elements (CCEs) included in a downlink control channel (e.g., physical downlink control channel (PDCCH) or a control resource set (CORESET)) received by the terminal before PUCCH transmission, the index of CCE (e.g., leading CCE index), and information included in downlink control information (DCI).

As described above, the cell-specific PUCCH resource is characterized by being frequency-hopped within a slot (e.g., referred to as intra-slot hopping) using PRBs near the edges of the uplink BWP.

[Reduced Capability NR Devices]

In Release 17 (hereinafter, referred to as Rel-17 NR), a specification (e.g., Reduced Capability (RedCap)) is expected to be developed for realizing a terminal (e.g., NR terminal) whose power consumption or cost is reduced by limiting some of the functions or performance to support various use cases, compared to Release 15 or 16 (hereinafter, referred to as Rel-15/16 NR) (e.g., initial release of NR) (e.g., see NPL 2).

Such a terminal is sometimes referred to as a reduced capability NR device, RedCap, a RedCap terminal, NR-Lite, or NR-Light, for example.

In order to reduce power consumption or cost, reduction in computational complexity in the terminal has been studied, for example. One method for reducing the computational complexity in the terminal is, for example, a method for configuring a bandwidth supported by the terminal to be narrower than the bandwidth supported by the existing terminal. For example, the maximum frequency bandwidth supported by a terminal (hereinafter, referred to as a "non-RedCap" or "non-RedCap terminal" for convenience) different from the RedCap terminal may be 100 MHz in FR1 (frequency range 1) and 200 MHz in FR2 (frequency range 2). On the other hand, the maximum frequency bandwidth supported by the RedCap terminal may be 20 MHz in FR1 and 100 MHz in FR2.

As described above, the non-RedCap terminal may use a PUCCH resource included in a cell-specific PUCCH resource set, for example. In this case, the frequency resource of the PUCCH may be configured, for example, in PRBs near the edges of a bandwidth (e.g., BWP) for the non-RedCap terminal. Thus, when the BWP for the non-RedCap terminal supports a bandwidth of 100 MHz, for example, the RedCap terminal supporting a bandwidth of 20 MHz cannot use the PUCCH resource for the non-RedCap terminal.

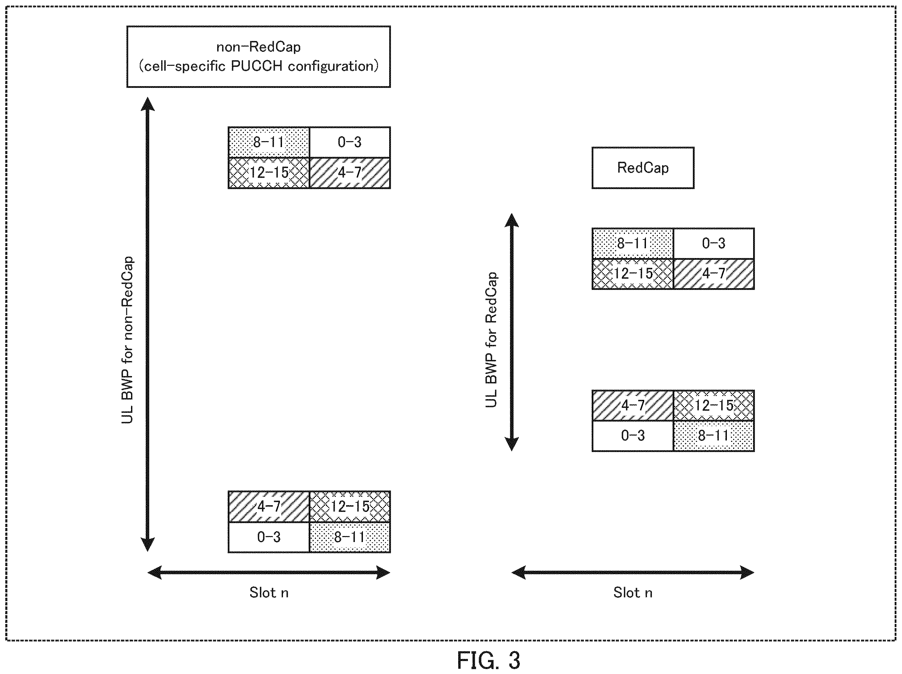

For example, as illustrated in FIG. 3, a base station (e.g., also referred to as gNB) may configure a PUCCH resource set for a RedCap separately from a PUCCH resource set for a non-RedCap terminal. This may increase the amount of data (signaling overhead) for configuration of the PUCCH resource set for the RedCap for the RedCap terminal.

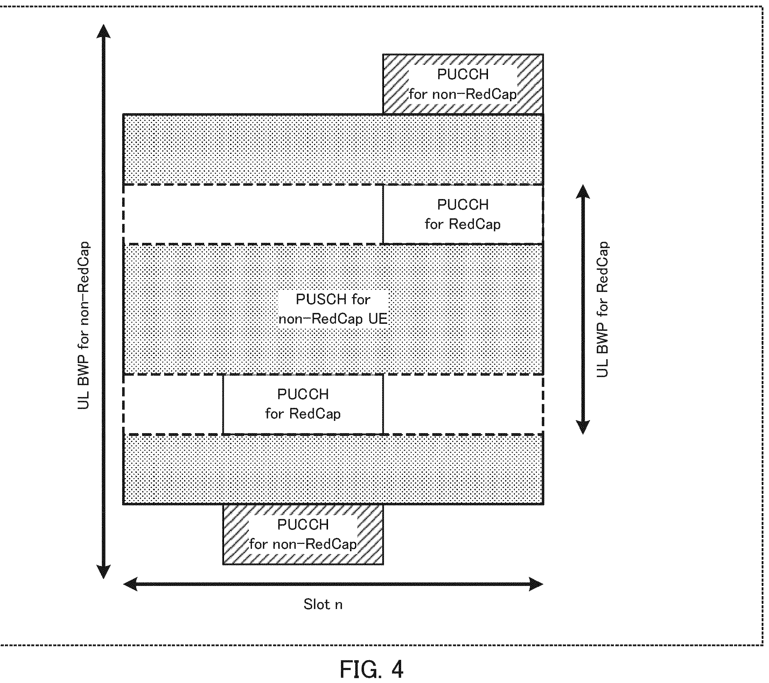

Further, as illustrated in FIG. 4, a PUCCH resource for a RedCap terminal possibly fragments an uplink shared channel (e.g., physical uplink shared channel (PUSCH) or uplink data channel) resource for a non-RedCap terminal, for example. For example, as illustrated in FIG. 4, when a PUCCH resource for a RedCap terminal (PUCCH for RedCap) is configured in a PRB near the center of the BWP for the non-RedCap terminal, the non-RedCap terminal cannot use the PRB for PUSCH transmission. At this time, for example, for a non-RedCap terminal that does not support PUSCH transmission in non-consecutive PRBs, the number of consecutive PRBs available for PUSCH transmission may be limited, which possibly deteriorates the peak data rate.

Thus, in a non-limiting embodiment of the present disclosure, for example, a method for enhancing the efficiency of resource allocation in a terminal will be described.

For example, in a non-limiting embodiment of the present disclosure, a terminal (e.g., RedCap terminal) may configure a PUCCH resource that is used by a RedCap mobile station and different from a PUCCH resource used by a non-RedCap terminal, based on a cell-specific PUCCH resource configuration. For example, the RedCap terminal may be provided information on a difference in at least one of a time domain and/or a frequency domain between the PUCCH resource used by the RedCap terminal and the cell-specific PUCCH resource. This can reduce the amount of data for configuration of the PUCCH resource for the RedCap terminal. Further, for example, it is possible to avoid fragment of a PUSCH resource for a non-RedCap terminal. Therefore, according to a non-limiting embodiment of the present disclosure, the efficiency of PUCCH resource utilization can be enhanced.

[Overview of Communication System]

A communication system according to the present embodiment includes base station 100 and terminal 200.

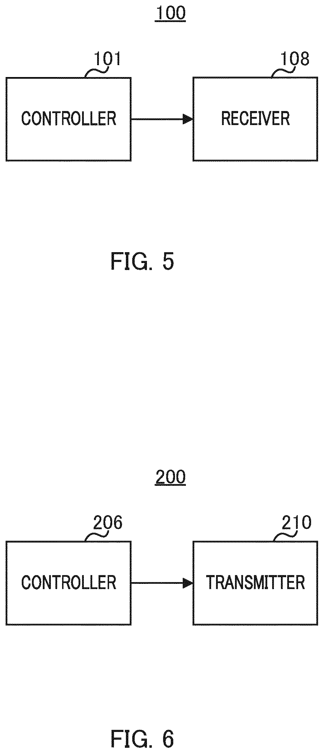

FIG. 5 is a block diagram illustrating an exemplary configuration of a part of base station 100 according to the present embodiment. In base station 100 illustrated in FIG. 5, controller 101 (e.g., corresponding to control circuitry) configures, based on information (e.g., cell-specific PUCCH resource set) on a configuration of the first resource for the first type terminal (e.g., non-RedCap terminal), the second resource different from the first resource for the second type terminal (e.g., RedCap terminal). Receiver 108 (e.g., corresponding to reception circuitry) receives a signal (e.g., PUCCH) in the second resource.

FIG. 6 is a block diagram illustrating an exemplary configuration of a part of terminal 200 according to the present embodiment. In terminal 200 illustrated in FIG. 6, controller 206 (e.g., corresponding to control circuitry) configures, based on information (e.g., cell-specific PUCCH resource set) on a configuration of the first resource for the first type terminal (e.g., non-RedCap terminal), the second resource different from the first resource for the second type terminal (e.g., RedCap terminal). Transmitter 210 (e.g., corresponding to transmission circuitry) transmits a signal (e.g., PUCCH) in the second resource.

[Configuration of Base Station]

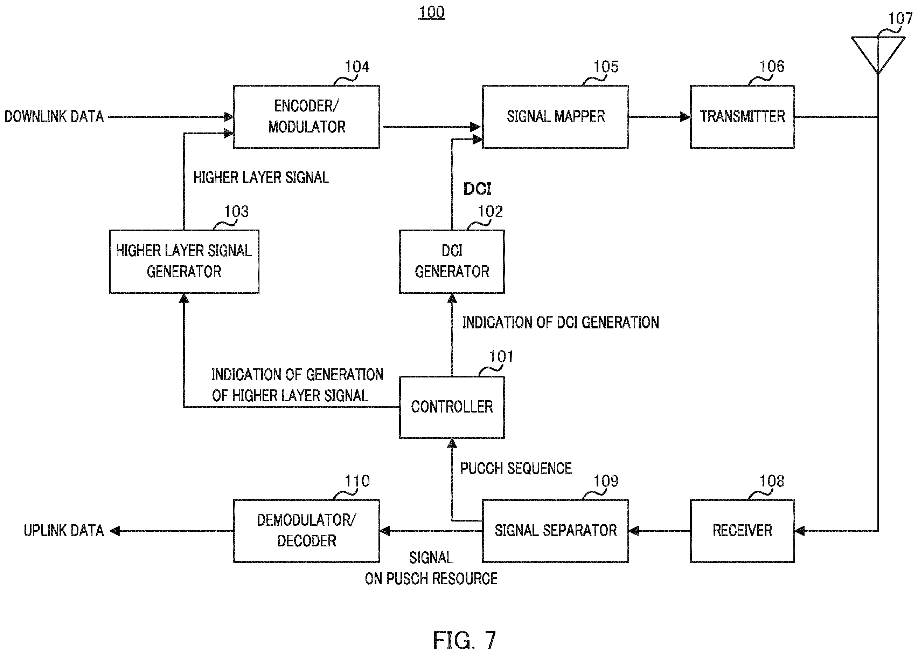

FIG. 7 is a block diagram illustrating an exemplary configuration of base station 100 according to the present embodiment. In FIG. 7, base station 100 includes controller 101, DCI generator 102, higher layer signal generator 103, encoder/modulator 104, signal mapper 105, transmitter 106, antenna 107, receiver 108, signal separator 109, and demodulator/decoder 110.

For example, controller 101 may determine a configuration of a cell-specific PUCCH resource set. Based on the determined configuration, controller 101 may indicate, to higher layer signal generator 103, generation of a higher layer signal (e.g., also referred to as a higher layer parameter or higher layer signaling) such as system information. Further, controller 101 may determine a configuration of a downlink control channel (e.g., PDCCH) or control information (e.g., DCI) included in the downlink control channel, for example. Based on the determined information, controller 101 may indicate, to DCI generator 102, generation of downlink control information (e.g., DCI).

Further, controller 101 may configure a PUCCH resource that is used by a RedCap terminal and different from a PUCCH resource used by a non-RedCap terminal, based on the configuration of the cell-specific PUCCH resource set.

Further, controller 101 may control transmission processing (e.g., processing of transmitting downlink data) based on a PUCCH sequence inputted from signal separator 109.

For example, DCI generator 102 may generate DCI based on the indication from controller 101 and output the generated DCI to signal mapper 105.

Higher layer signal generator 103 may generate a higher layer signal such as system information based on the indication from controller 101 and output the generated higher layer signal to encoder/modulator 104, for example.

Encoder/modulator 104 may, for example, perform error correction coding and modulation on downlink data (e.g., PDSCH) and the higher layer signal inputted from higher layer signal generator 103, and output the modulated signal to signal mapper 105.

For example, signal mapper 105 may map the DCI inputted from DCI generator 102 and the signal inputted from encoder/modulator 104 to resources. For example, signal mapper 105 may map the signal inputted from encoder/modulator 104 to a PDSCH resource and map the DCI to a PDCCH resource. Signal mapper 105 outputs the signal mapped to each resource to transmitter 106.

For example, transmitter 106 performs radio transmission processing including frequency conversion (e.g., up-conversion) that uses a carrier wave on the signal inputted from signal mapper 105, and outputs the signal after the radio transmission processing to antenna 107.

Antenna 107 radiates the signal (e.g., downlink signal) inputted from transmitter 106 toward terminal 200, for example. Further, antenna 107 receives an uplink signal transmitted from terminal 200, and outputs the uplink signal to receiver 108, for example.

The uplink signal may be, for example, a signal of a channel such as an uplink data channel (e.g., PUSCH), uplink control channel (e.g., PUCCH), or random access channel (e.g., physical random access channel (PRACH)).

For example, receiver 108 performs radio reception processing including frequency conversion (e.g., down-conversion) on the signal inputted from antenna 107, and outputs the signal after the radio reception processing to signal separator 109.

Signal separator 109 extracts (in other words, separates) a signal (e.g., PUCCH sequence) on a PUCCH resource from signals inputted from receiver 108 and outputs the signal to controller 101, for example. Further, signal separator 109 outputs, from signals inputted from receiver 108, a signal on a PUSCH resource to demodulator/decoder 110.

For example, demodulator/decoder 110 demodulates and decode the signal inputted from signal separator 109, and outputs uplink data.

[Configuration of Terminal]

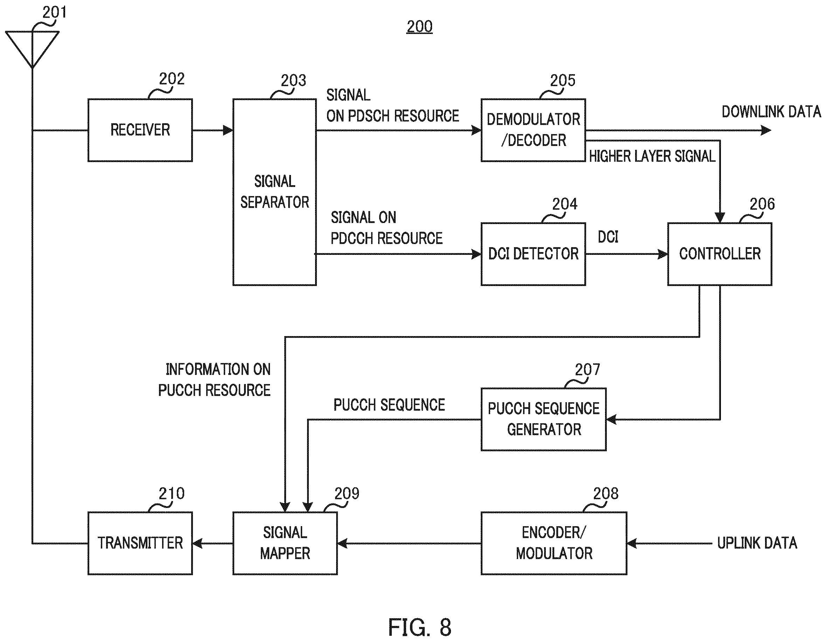

FIG. 8 is a block diagram illustrating an exemplary configuration of terminal 200 according to the present embodiment.

In FIG. 8, terminal 200 includes antenna 201, receiver 202, signal separator 203, DCI detector 204, demodulator/decoder 205, controller 206, PUCCH sequence generator 207, encoder/modulator 208, signal mapper 209, and transmitter 210.

Antenna 201 receives a downlink signal transmitted by base station 100, and outputs the downlink signal to receiver 202. In addition, antenna 201 radiates an uplink signal inputted from transmitter 210 to base station 100.

For example, receiver 202 performs radio reception processing including frequency conversion (e.g., down-conversion) on the signal inputted from antenna 201, and outputs the signal after the radio reception processing to signal separator 203.

Signal separator 203 extracts (in other words, separates) a signal on a PDCCH resource from signals inputted from receiver 202 and outputs the signal to DCI detector 204, for example. Further, signal separator 203 outputs, from signals inputted from receiver 202, a signal on a PDSCH resource to demodulator/decoder 205.

For example, DCI detector 204 may detect DCI from the signal (e.g., signal on the PDCCH resource) inputted from signal separator 203. DCI detector 204 may output the detected DCI to controller 206, for example.

For example, demodulator/decoder 205 performs demodulation and error correction decoding on the signal (e.g., signal on the PDSCH resource) inputted from signal separator 203, and obtains at least one of downlink data and/or a higher layer signal such as system information. For example, demodulator/decoder 205 may output the higher layer signal obtained by decoding to controller 206.

For example, controller 206 may determine a configuration of a cell-specific PUCCH resource set based on the higher layer signal (e.g., system information) inputted from demodulator/decoder 205. Further, for example, controller 206 may determine a PUCCH resource set used by terminal 200 (e.g., RedCap terminal) based on the determined cell-specific PUCCH resource set and a preconfigured parameter.

Further, controller 206 may determine a value of $r_{PUCCH}$ based on, for example, the configuration of PDCCH and the DCI inputted from DCI detector 204. For example, from the determined PUCCH resource set, controller 206 outputs information on a PUCCH resource corresponding to the determined $r_{PUCCH}$ to signal mapper 209. Further, controller 206 may indicate generation of a PUCCH sequence to PUCCH sequence generator 207.

For example, PUCCH sequence generator 207 generates a PUCCH sequence in accordance with the indication from controller 206, and outputs the generated PUCCH sequence to signal mapper 209.

Encoder/modulator 208 may, for example, encode and modulate uplink data (e.g., PUSCH) and output the modulated signal to signal mapper 209.

For example, signal mapper 209 may map the PUCCH sequence inputted from PUCCH sequence generator 207 to the PUCCH resource based on the information on the PUCCH resource inputted from controller 206. Further, for example, signal mapper 209 may map the signal inputted from encoder/modulator 208 to a PUSCH resource. Signal mapper 209 outputs the signal mapped to each resource to transmitter 210.

Transmitter 210 performs radio transmission processing including frequency conversion (e.g., up-conversion) on the signal inputted from signal mapper 209, and outputs the signal after the radio transmission processing to antenna 201, for example.

[Exemplary Operation of Base Station 100 and Terminal 200]

Next, an exemplary operation of base station 100 and terminal 200 described above will be described.

<Operation Example 1>

In Operation Example 1, for a PUCCH time resource (e.g., referred to as "T1") for a RedCap terminal, base station 100 and terminal 200 may configure one slot based on information on a configuration of a PUCCH time resource for a non-RedCap terminal, for example.

Further, for a PUCCH frequency resource (F1) for a RedCap terminal, base station 100 and terminal 200 may configure one PRB based on information on a configuration of a PUCCH frequency resource for the non-RedCap terminal, for example.

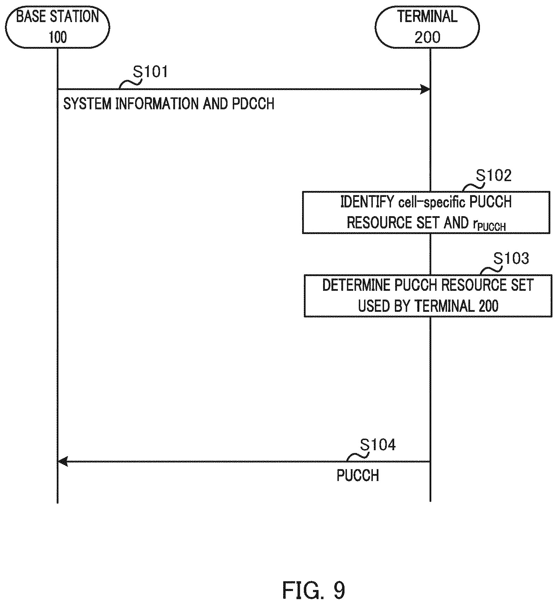

FIG. 9 is a sequence diagram illustrating an exemplary operation of base station 100 and terminal 200.

<S101>

Base station 100 may determine a cell-specific PUCCH resource set to be configured for a terminal (e.g., non-RedCap) and indicate information on the determined cell-specific PUCCH resource set to terminal 200 using system information. Further, base station 100 may indicate DCI to terminal 200 using a PDCCH, for example.

<S102>

Terminal 200 may identify the cell-specific PUCCH resource set based on the received system information, for example. Further, terminal 200 may identify a value of $r_{PUCCH}$ based on the received DCI, for example.

<S103>

Terminal 200 may determine, for example, a PUCCH resource set used by terminal 200. For example, terminal 200 may determine the PUCCH resource set based on the indicated cell-specific PUCCH resource set and a parameter on the PUCCH resource set used by terminal 200.

For example, for a PUCCH time resource (T1), a parameter "t1" (e.g., integer value) on a relative position (e.g., difference or offset) between a time resource (e.g., slot) of the cell-specific PUCCH resource set and a time resource (e.g., slot) of the PUCCH resource set used by terminal 200 may be configured in terminal 200.

For example, when the cell-specific PUCCH resource set is mapped in slot n, terminal 200 may configure slot n+t1 for a PUCCH resource used by terminal 200 (e.g., RedCap terminal).

Note that parameter t1 may be preconfigured in terminal 200, may be indicated from base station 100 to terminal 200 using at least one of higher layer signaling and/or DCI, or may be defined in the standard. Further, t1 need not be configured in terminal 200. In this case, terminal 200 may configure the same slot for the PUCCH resource used by terminal 200 as for the cell-specific PUCCH resource set.

As described above, the PUCCH resource used by terminal 200 (e.g., RedCap terminal) may include one slot configured based on a slot included in a PUCCH resource of a cell-specific PUCCH resource set and parameter t1 (e.g., information on a difference in time resources).

Further, for a PUCCH frequency resource (F1), a parameter "f1" on a relative position (e.g., difference or offset) between a frequency resource (e.g., PRB) of the cell-specific PUCCH resource set and a frequency resource (e.g., PRB) of the PUCCH resource set used by terminal 200 may be configured in terminal 200, for example.

For example, terminal 200 may configure PRBs apart from PRBs at the edges of a band included in the uplink BWP of the non-RedCap terminal by $RB_{BWP}^{offset}+f1$ as candidates for a PUCCH resource used by terminal 200 (e.g., RedCap terminal), based on the parameter f1 and an offset $RB_{BWP}^{offset}$ included in the cell-specific PUCCH resource.

Further, for the PUCCH frequency resource (F1), a parameter "fl1" that can take two values of "lower" and "higher" may be set in terminal 200, for example.

For example, based on the parameter fl1, terminal 200 may configure either one of the PRBs (e.g., PRB corresponding to lower or PRB corresponding to higher) apart from PRBs at the edges of the band included in the uplink BWP of the non-RedCap terminal by $RB_{BWP}^{offset}+f1$ for a PUCCH resource used by terminal 200 (e.g., RedCap terminal).

Note that each of parameter f1 and parameter fl1 may be preconfigured in terminal 200, may be indicated from base station 100 to terminal 200 using at least one of higher layer signaling and/or DCI, or may be defined in the standard. Further, f1 need not be configured in terminal 200. In this case, terminal 200 may configure the same PRB for the PUCCH resource used by terminal 200 as for the cell-specific PUCCH resource set, for example.

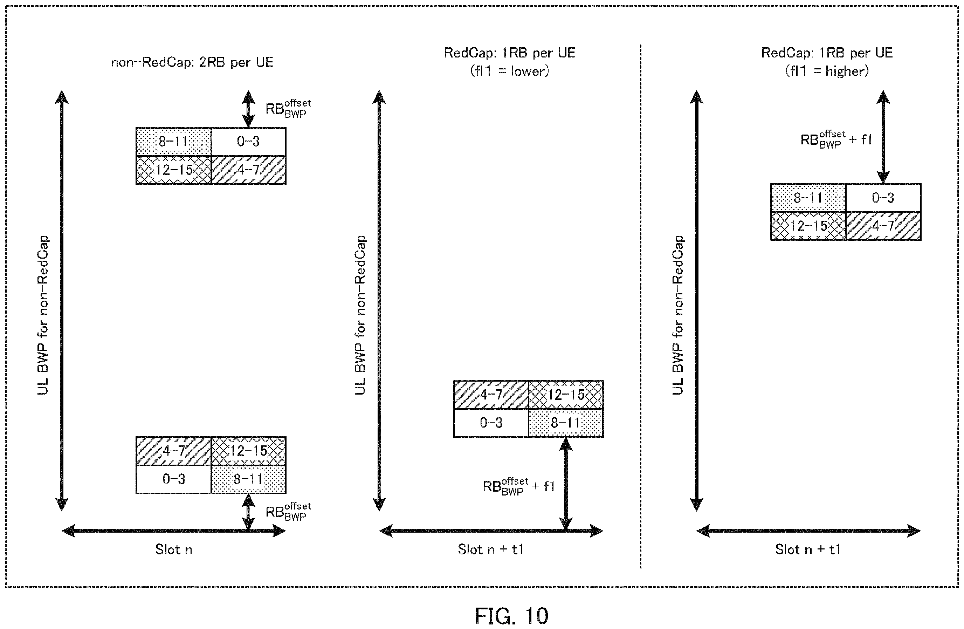

For example, as illustrated in FIG. 10, when fl1 is "lower", terminal 200 may configure a PRB used by terminal 200 based on a PRB configured at the edge on the lower frequency side in the band of the uplink BWP for a non-RedCap terminal and parameter f1.

Similarly, for example, as illustrated in FIG. 10, when fl1 is "higher", terminal 200 may configure a PRB used by terminal 200 based on a PRB configured at the edge on the higher frequency side in the band of the uplink BWP for a non-RedCap terminal and parameter f1.

As described above, the PUCCH resource used by terminal 200 (e.g., RedCap terminal) may include one PRB configured based on difference f1 and a PRB configured at one of the edges (e.g., lower or higher frequency) of the UL BWP allocated for a non-RedCap terminal.

<S104>

In FIG. 9, terminal 200 transmits a PUCCH (e.g., PUCCH sequence) to base station 100 using the PUCCH resource of the PUCCH resource set determined in the process of S103 corresponding to $r_{PUCCH}$ identified in the process of S103 from.

As described above, in Operation Example 1, terminal 200 configures a PUCCH resource set used by terminal 200 (e.g., RedCap terminal) based on information on a cell-specific PUCCH resource set and a parameter configured for terminal 200 (e.g., information on a difference between a cell-specific PUCCH resource and a PUCCH resource used by terminal 200).

Thus, the configuration (e.g., information on a cell-specific PUCCH resource set) of a PUCCH resource for a non-RedCap terminal can be used (in other words, diverted) for the determination of a PUCCH resource used by a RedCap terminal. Further, for example, in a case where information (e.g., t1, f1, and fl1) on the PUCCH resource of the RedCap terminal is preconfigured in terminal 200, it is not necessary to add a signal for indication of a PUCCH resource. Furthermore, for example, the information on the PUCCH resource for the RedCap terminal is information f1 on a difference and information fl1 on one of the edges of the uplink BWP, and thus, even when the information is indicated to base station 100 to terminal 200, an increase in the amount of indicated information can be suppressed, compared to the case where all of the information on the PUCCH resource is indicated.

Thus, according to Operation Example 1, it is possible to suppress an increase in signaling overhead for a RedCap terminal.

Further, for example, according to the configuration of the PUCCH resource illustrated in FIG. 10, since terminal 200 uses one PRB and need not perform frequency hopping, terminal 200 need not perform frequency switching (RF retuning or BWP switching) of its own. Thus, the processing of terminal 200 can be simplified.

Further, for example, according to the configuration of the PUCCH resource illustrated in FIG. 10, the number of PRBs occupied by the PUCCH resource set configured for terminal 200 can be reduced compared to the number of PRBs for a non-RedCap terminal, and thus the occurrence of fragment of a PUSCH resource allocated for the non-RedCap terminal can be suppressed.

Note that, in Operation Example 1, at least one of t1 and/or f1 may be 0 (in other words, no difference). For example, when at least one of t1 and/or f1 is 0, overhead of PUCCH resource can be reduced. Further, for example, when at least one of t1 and/or f1 is not 0, collision of PUCCH resources between a non-RedCap terminal and a RedCap terminal can be reduced.

For example, even in a case where t1 = 0, when f1 $\neq$ 0, the PUCCH resource (PRB) for the RedCap terminal can be configured in the same slot as the PRB for the non-RedCap terminal. Further, for example, even in a case where f1 = 0, when t1 $\neq$ 0, the PUCCH resource for the RedCap terminal can be configured in a different slot from that for the non-RedCap terminal and in the same PRB as that for the non-RedCap terminal. Furthermore, for example, even in a case where t1 = 0 and f1 =0, the PUCCH resource of the RedCap terminal can be configured in the same slot and PRB as that for the non-RedCap terminal by, for example, different $r_{PUCCH}$ or a different cyclic shift.

In addition, in Operation Example 1, f1 is not limited to a positive value and may be a negative value. In other words, in the uplink BWP, the PRB configured for the RedCap terminal is not limited to be configured in an inner area with respect to the PRB configured for the non-RedCap terminal as illustrated in FIG. 10, and may be configured in an outer area (on the edge side of BWP).

Moreover, in Operation Example 1, t1 is not limited to a positive value and may be a negative value. In other words, the time resource (e.g., slot) configured for terminal 200 may be configured in a slot before or after the cell-specific PUCCH resource.

<Operation Example 2>

In Operation Example 2, for a PUCCH time resource (e.g., referred to as "T2") for a RedCap terminal, base station 100 and terminal 200 may configure a plurality of slots based on information on a configuration of a PUCCH time resource for a non-RedCap terminal, for example.

Further, for a PUCCH frequency resource (F2) for a RedCap terminal, base station 100 and terminal 200 may configure a plurality of PRBs based on information on a configuration of a PUCCH resource for a non-RedCap terminal, for example. For example, the PUCCH resource for the RedCap terminal may be configured in PRBs corresponding to a frequency near the lowest frequency and a frequency near the highest frequency in the BWP of the non-RedCap terminal.

In Operation Example 2, for example, among the processes illustrated in FIG. 9, the process of S103 is different from that of Operation Example 1 (hereinafter, referred to as "S103'"), and the other processes (e.g., S101, S102, and S103) may be the same as those of Operation Example 1.

<S103'>

Terminal 200 may determine, for example, a PUCCH resource set used by terminal 200. For example, terminal 200 may determine a PUCCH resource set based on the indicated cell-specific PUCCH resource set and a parameter on the PUCCH resource set used by terminal 200.

For example, for a time resource (T2) of a PUCCH, parameters "t2" and "t3" (e.g., integer values) on relative positions (e.g., differences or offsets) between a time resource (e.g., slot) of the cell-specific PUCCH resource set and a time resource (e.g., slot) of the PUCCH resource used by terminal 200 may be configured in terminal 200.

For example, when the cell-specific PUCCH resource set is mapped in slot n, terminal 200 may configure slots n+t2 and n+t3 for the PUCCH resource used by terminal 200 (e.g., RedCap terminal).

Note that at least one of parameters t2 and/or t3 may be preconfigured in terminal 200, may be indicated from base station 100 to terminal 200 using at least one of higher layer signaling and/or DCI, or may be defined in the standard. In addition, either one of t2 and t3 need not be configured in terminal 200. For example, when t2 is not configured, terminal 200 may configure the same slots, slot n and slot n+t3, for the PUCCH resource used by terminal 200 as for the cell-specific PUCCH resource set.

As described above, a PUCCH resource used by terminal 200 (e.g., RedCap terminal) may include a plurality of slots configured based on a slot included in a PUCCH resource of a cell-specific PUCCH resource set and parameters t2 and t3 (e.g., information on differences in time resources).

Further, for a frequency resource (F2) of a PUCCH, a parameter "f2" on a relative position (e.g., difference or offset) between a frequency resource (e.g., PRB) of a cell-specific PUCCH resource set and a frequency resource (e.g., PRB) of a PUCCH resource set used by terminal 200 may be configured in terminal 200, for example.

For example, terminal 200 may configure two PRBs apart from respective PRBs at the edges of a band included in the uplink BWP of the non-RedCap terminal by $RB_{BWP}^{offset}+f2$ for the PUCCH resource used by terminal 200 (e.g., RedCap terminal), based on parameter f2 and offset $RB_{BWP}^{offset}$ included in the cell-specific PUCCH resource set.

Note that parameter f2 may be preconfigured in terminal 200, may be indicated from base station 100 to terminal 200 using at least one of higher layer signaling and/or DCI, or may be defined in the standard. Further, f2 need not be configured in terminal 200. In this case, terminal 200 may configure the same PRB for the PUCCH resource used by terminal 200 as for the cell-specific PUCCH resource set, for example.

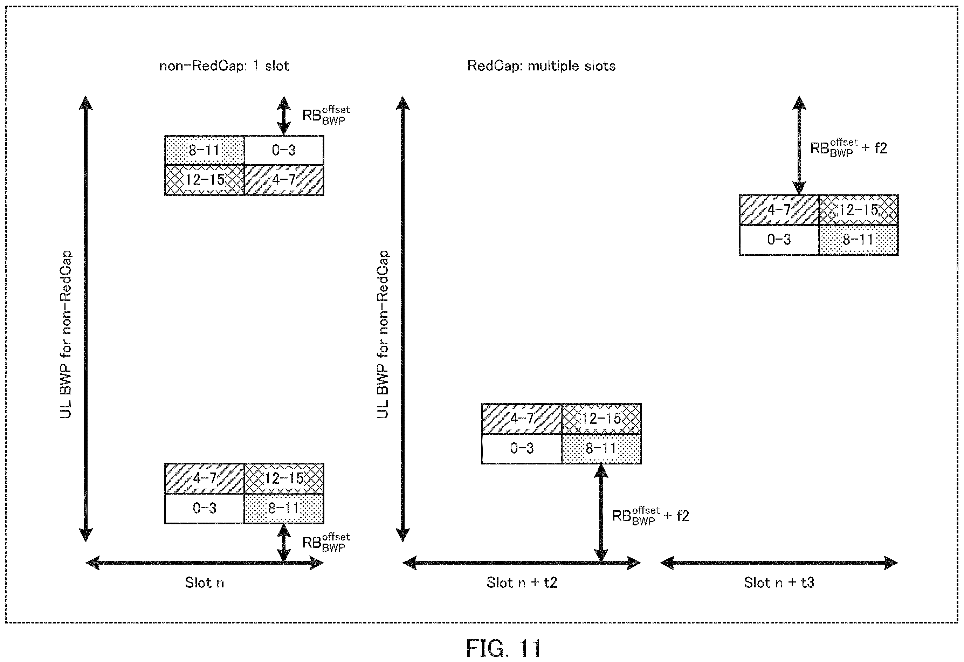

For example, as illustrated in FIG. 11, of the PRBs apart from PRBs at the edges of the band included in the uplink BWP of the non-RedCap terminal by $RB_{BWP}^{offset}+f2$, terminal 200 may configure a PRB on the lower frequency side in slot n+t2 and a PRB on the higher frequency side in slot n+t3.

Alternatively, for example, of the PRBs apart from PRBs at the edges of the band included in the uplink BWP of the non-RedCap terminal by $RB_{BWP}^{offset}+f2$, terminal 200 may configure a PRB on the higher frequency side in slot n+t2 and a PRB on the lower frequency side in slot n+t3 (not illustrated).

As described above, the PUCCH resource used by terminal 200 (e.g., RedCap terminal) may include a plurality of PRBs configured based on difference f2 and PRBs respectively configured at the edges (e.g., lower frequency and higher frequency) in the UL BWP allocated for the non-RedCap terminal.

Further, the plurality of PRBs included in the PUCCH resource used by terminal 200 (e.g., RedCap terminal) may be configured in different slots (e.g., slot n+t2 and slot n+t3) from each other.

As described above, in Operation Example 2, similarly to Operation Example 1, terminal 200 configures a PUCCH resource set used by terminal 200 (e.g., RedCap terminal) based on information on a cell-specific PUCCH resource set and a parameter configured for terminal 200 (e.g., information on a difference between the cell-specific PUCCH resource and the PUCCH resource used by terminal 200).

Thus, the configuration (e.g., information on a cell-specific PUCCH resource set) of a PUCCH resource for a non-RedCap terminal can be used (in other words, diverted) for the determination of a PUCCH resource used by the RedCap terminal. Further, for example, in a case where information (e.g., t2, t3, and f2) on the PUCCH resource of the RedCap terminal is preconfigured in terminal 200, it is not necessary to add a signal to indicate a PUCCH resource. Furthermore, for example, the information on the PUCCH resource for the RedCap terminal is information t2, t3, and f2 on differences, and thus, even when the information is indicated from base station 100 to terminal 200, an increase in the amount of indicated information can be suppressed, compared to the case where all of the information on the PUCCH resource is indicated.

Thus, according to Operation Example 2, it is possible to suppress an increase in signaling overhead for a RedCap terminal.

Further, in Operation Example 2, a plurality of slots is included in the PUCCH resource used by terminal 200, and thus frequency switching (e.g., RF retuning or BWP switching) is allowed between the plurality of slots in terminal 200. Thus, in Operation Example 2, for example, by including a plurality of PRBs in the PUCCH resource used by terminal 200 and applying inter-slot frequency hopping to the PUCCH resource, reception accuracy of the PUCCH in base station 100 can be improved by a frequency diversity effect.

Further, in Operation Example 2, PRBs near the edges (e.g., PRBs within a predetermined value from the edges) of the band included in the uplink BWP of the non-RedCap terminal are configured for the PUCCH resource used by terminal 200, so that allocation to the vicinity of the center of the band included in the uplink BWP can be avoided, which can suppress the occurrence of fragment of a PUSCH resource allocated for a non-RedCap terminal.

Note that, in Operation Example 2, at least one of t2 and/or t3 or f2 may be 0 (in other words, no difference). For example, when either one of t2 and t3 or f2 is 0, overhead of PUCCH resource can be reduced. Further, for example, when either one of t2 and t3 or f2 is not 0, collision of PUCCH resources between a non-RedCap terminal and a RedCap terminal can be reduced.

Further, in Operation Example 2, the number of slots included in the PUCCH resource used by the RedCap terminal is not limited to two, and may be three or more.

Further, in FIG. 11, a case has been exemplarily described in which PRBs apart from PRBs at the respective edges (lower frequency side and higher frequency side) of the uplink BWP by $RB_{BWP}^{offset}+f2$ are configured for the PUCCH resource used by terminal 200, but the present disclosure is not limited thereto.

For example, offset values from PRBs at the respective edges (lower frequency side and higher frequency side) of the uplink BWP may be different from each other. For example, a PRB apart from a PRB at one edge of the uplink BWP by $RB_{BWP}^{offset}+f2$ and a PRB apart from a PRB at the other edge of the uplink BWP by $RB_{BWP}^{offset}+f3$ (herein, f2 ≠ f3) may be configured for the PUCCH resource used by terminal 200.

Alternatively, a PRB apart from a PRB at one edge (on either one of lower frequency side and higher frequency side) of the uplink BWP by $RB_{BWP}^{offset}+f2$ may be configured over a plurality of slots (e.g., slots n+t2 and n+t3).

In addition, in Operation Example 2, f2 is not limited to a positive value and may be a negative value. In other words, in the uplink BWP, a PRB configured for the RedCap terminal is not limited to be configured in an inner area with respect to the PRB configured for the non-RedCap terminal as illustrated in FIG. 11, and may be configured in an outer area (on the edge side of BWP).

Moreover, in Operation Example 2, at least one of t2 and/or t3 is not limited to a positive value, and may be a negative value. In other words, a time resource (e.g., slot) configured for terminal 200 may be configured in a slot before or after the cell-specific PUCCH resource.

In Operation Example 2, terminal 200 may repeatedly transmit the same content in the PUCCH transmitted over a plurality of slots. In other words, terminal 200 may perform repetition transmission in the plurality of slots. The repetition transmission allows more robust transmission and reception, which can improve the reception quality in base station 100.

The exemplary operation of base station 100 and terminal 200 has been described above.

As described above, in the present embodiment, base station 100 and terminal 200 may configure a PUCCH resource (resource different from a cell-specific PUCCH resource set) for a RedCap terminal based on information on a configuration of a PUCCH resource for a non-RedCap terminal (e.g., configuration of cell-specific PUCCH resource set).

Thus, terminal 200 can configure a PUCCH resource set for a RedCap separately from the PUCCH resource set for the non-RedCap terminal based on the configuration of the cell-specific PUCCH resource set, and therefore, an increase in the number of signals (signaling overhead) for configuration of the PUCCH resource set for the RedCap for the RedCap terminal can be suppressed.

Further, for example, a frequency resource of a PUCCH for a RedCap terminal includes one PRB in Operation Example 1 and a plurality of PRBs near the edges of the UL BWP of the non-RedCap terminal in Operation Example 2. This can avoid fragment of a PUSCH resource for the non-RedCap terminal by the PUCCH resource for the RedCap terminal, which can suppress deterioration of the peak data rate.

Therefore, according to the present embodiment, the efficiency of resource allocation for terminal 200 can be enhanced.

The embodiment of the present disclosure has been described above.

[Other Embodiments]

(Variation 1)

In each Operation Example of the above-described embodiment of the present disclosure, at least one of f1 and/or f2 may be given by the following Expression (1).

[1]

$$f1 \ \text{ or } \ f2 = \lceil 8/N_{CS} \rceil \qquad \dots(\text{Expression } 1)$$

$N_{CS}$ herein indicates the number of initial CS indexes included in the "set of initial CS indexes" in the configured cell-specific PUCCH resource.

For example, when Index=8 of the cell-specific PUCCH resource set illustrated in FIG. 1 is set, $N_{CS}$ = 4. In this case, at least one of f1 and/or f2 may be set to 2 according to Expression 1.

This allows the cell-specific PUCCH resource of the non-RedCap terminal and the cell-specific PUCCH resource of the RedCap terminal to be transmitted in neighboring PRBs, which can prevent the PUCCH resource of the RedCap terminal from fragmenting the PUSCH resource of the non-RedCap terminal.

Note that the number "8" used in Expression 1 may be set for the cell-specific PUCCH resource based on a range of values (e.g., eight of 0 to 7 or eight of 8 to 15 in FIGS. 10 and 11) for $r_{PUCCH}$ corresponding to a frequency direction of PRB located at one edge of the band included in the uplink BWP. In other words, the number "8" used in Expression 1 may be based on a number used to determine the PRB index of the PUCCH resource (e.g., each hop to be described below).

Further, at least one of f1 and/or f2 may be given by the following Expression 2.

[2]

$$f1 \text{ or } f2 = -\lceil 8/N_{CS} \rceil \qquad \ldots \text{(Expression 2)}$$

According to Expression 2, the PUCCH resource used by the RedCap terminal is configured in the PRB adjacent to the outer side of the cell-specific PUCCH resource.

(Variation 2)

In each of the above described Operation Examples of the embodiment of the present disclosure, a size of a time resource (length of time resource) of a cell-specific PUCCH resource may be different between a non-RedCap terminal and a RedCap terminal.

Time resources before and after hopping when a non-RedCap terminal transmits a cell-specific PUCCH by frequency hopping may be each referred to as a "hop" (e.g., first hop and second hop).

In Variation 2, for example, a size of at least one of a time domain and/or a frequency domain for each slot in the PUCCH resource used by a RedCap terminal may be different from the size of a hop in a slot of the PUCCH resource used by a non-RedCap terminal.

For example, the length of time resource of each hop may be half the number of symbols given by the configuration (e.g., Number of symbols) of the cell-specific PUCCH resource.

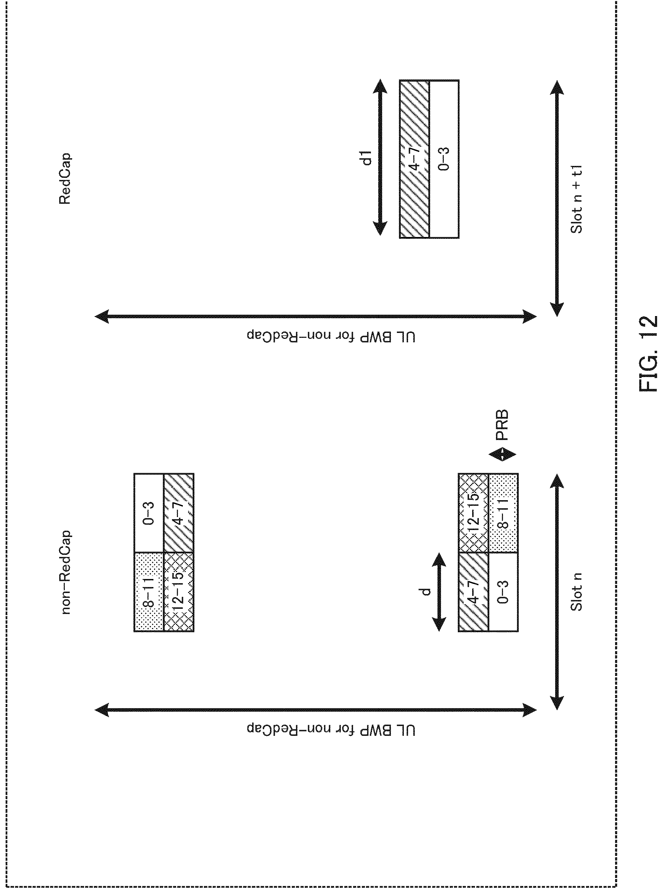

At this time, for example, as illustrated in FIG. 12, length d1 of the time resource for each slot of a PUCCH for a RedCap terminal may be longer than length d of the hop for a non-RedCap terminal. In the example illustrated in FIG. 12, d1 is set to twice d. This increases a resource allocated to the PUCCH for the RedCap terminal, which results in a decrease in the coding rate and thus improves the reception accuracy in base station 100.

Alternatively, for example, d1 may be configured to be shorter than length d of the hop in the non-RedCap terminal. This can reduce resource overhead due to PUCCH transmission of the RedCap terminal.

Note that d1 may be a value preset in terminal 200 or a value indicated from base station 100 to terminal 200. Further, for example, a plurality of candidates for d1 may be set, and the plurality of candidates may be switchable.

Similarly, a size of a frequency resource of the PUCCH used by the RedCap terminal may be different from a size of each hop in the PUCCH used by the non-RedCap terminal. For example, the size of the frequency resource of the PUCCH for the RedCap terminal may be larger or smaller than the size of the hop in the PUCCH for the non-RedCap terminal. Thus, in a frequency domain, similarly to the time domain, reception accuracy in base station 100 can be enhanced by increasing the resource allocated to the PUCCH for the RedCap terminal, or overhead due to PUCCH transmission of the RedCap terminal can be reduced by decreasing the resource allocated to the PUCCH for the RedCap terminal

(Variation 3)

In the above-described embodiment of the present disclosure, a different CS may be applied between a cell-specific PUCCH of a non-RedCap terminal and a cell-specific PUCCH of a RedCap terminal.

For example, a RedCap terminal may transmit a cell-specific PUCCH using an initial CS index obtained by shifting a value of an initial CS index used by a non-RedCap terminal by c1. The value of c1 may be, for example, 1 or may be different from 1. In other words, the CS value corresponding to the PUCCH resource used by the RedCap terminal may be a value obtained by adding an offset (c1) to a CS value corresponding to the PUCCH resource used by the non-RedCap terminal.

Thus, even when the RedCap terminal and the non-RedCap terminal transmit PUCCHs using the same time and frequency resource, the orthogonality of PUCCH can be secured. Note that c1 may be a value preset in terminal 200, a value indicated from base station 100 to terminal 200, or a value defined in the standard.

(Variation 4)

For a parameter (e.g., at least one of t1, t2, t3, f1, f2, d1, c1, and/or fl1) configured for a RedCap terminal in the embodiment of the present disclosure, a fixed value may be provided, a value may be explicitly or implicitly indicated by a control signal, or a value may be indicated in combination with other parameters of the cell-specific PUCCH resource set.

For example, a column corresponding to at least one of t1, t2, t3, f1, f2, d1, c1, and/or fl1 may be added to a table (e.g., table illustrated in FIG. 1) used for determination of a cell-specific PUCCH resource set, and the parameter may be indicated in combination with parameters such as PUCCH format, symbol, and PRB.

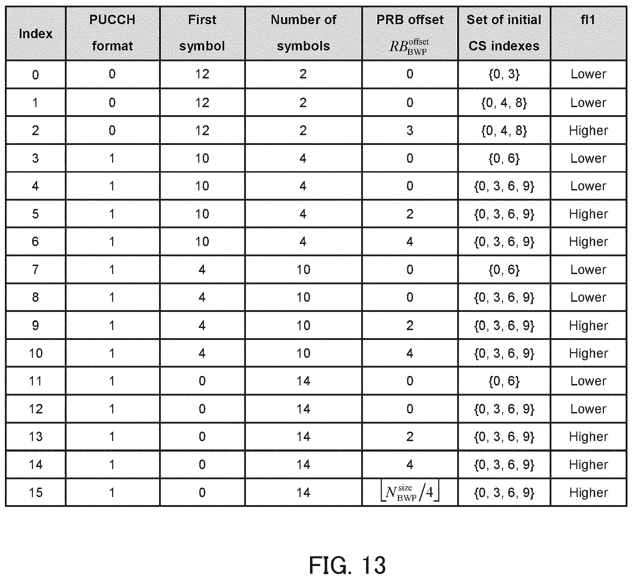

FIG. 13 illustrates an example in which a value of "fl1" (e.g., lower or higher) is added to the association (e.g., information in a table format) between parameters (combination of parameters) on a cell-specific PUCCH resource set and indexes (information recognizing the combination of parameters) illustrated in FIG. 1. That is, as illustrated in FIG. 13, a candidate for a combination of parameters including both information on a configuration of a PUCCH resource for a non-RedCap terminal and information on a PUCCH resource for a RedCap terminal and an index recognizing the candidate may be associated with each other.

Note that FIG. 13 is merely an example, and the parameter is not limited to fl1. Another parameter may be added to the table illustrated in FIG. 1.

For example, terminal 200 may refer to FIG. 13 and determine the parameter (e.g., fl1) to be configured for the RedCap terminal based on the index of the parameters on the cell-specific PUCCH resource set. Thus, in Variation 4, indication of the parameter to be configured for the RedCap terminal is possible with the existing index, which suppresses an increase in signaling overhead.

Note that, regarding a cell-specific PUCCH resource set, a value of t1, t2, t3, f1, f2, d1, c1, or fl1 may be configured to be plurally selectable in combinations of parameters in which at least one of set values of PUCCH format, number of symbols, PRB offset, and set of initial CS index is the same. For example, Indexes=1 and 2 illustrated in FIG. 13 includes combinations of parameters in which respective values of PUCCH format, the number of symbols, and set of initial CS index are the same, whereas the value of fl1 is different between Indexes=1 and 2. This increases the number of patterns of PUCCH resources configurable for the same PUCCH format, the number of symbols, or set of initial CS indexes, and thus the flexibility of PUCCH resource configuration can be enhanced.

Further, regarding a cell-specific PUCCH resource set, a value of t1, t2, t3, f1, f2, d1, c1, or fl1 may be the same in combinations of parameters in which at least one of set values of PUCCH format, number of symbols, PRB offset, and set of initial CS index is the same. This reduces the number of patterns of PUCCH resources configurable for the same PUCCH format, the number of symbols, PRB offset, or set of initial CS index, and thus the processing amount (e.g., computational complexity) in terminal 200 can be reduced.

Further, in combinations of parameters (e.g., table illustrated in FIG. 13) for the cell-specific PUCCH resource set, the number of indexes associated with combinations (e.g., rows in the table) in which fl1 is either one of lower and higher is larger than the number of indexes associated with combinations (e.g., rows in the table) in which fl1 is the other of lower and higher. This increases the probability that a PUCCH for a RedCap terminal is assigned to the frequency resource at either of the edges in the uplink BWP, and thus the processing amount (e.g., the computational complexity) in terminal 20 can be reduced.

Note that, in Variation 4, information (e.g., column) on the configuration of a PUCCH resource for a RedCap terminal in a table for a cell-specific PUCCH resource may be added to a table used by both the RedCap terminal and a non-RedCap terminal. Alternatively, a table (e.g., a dedicated table) for a RedCap terminal may be provided separately from the table for the non-RedCap terminal, and in the dedicated table, a column corresponding to the configuration of the PUCCH resource for the RedCap terminal may be configured (e.g., added).

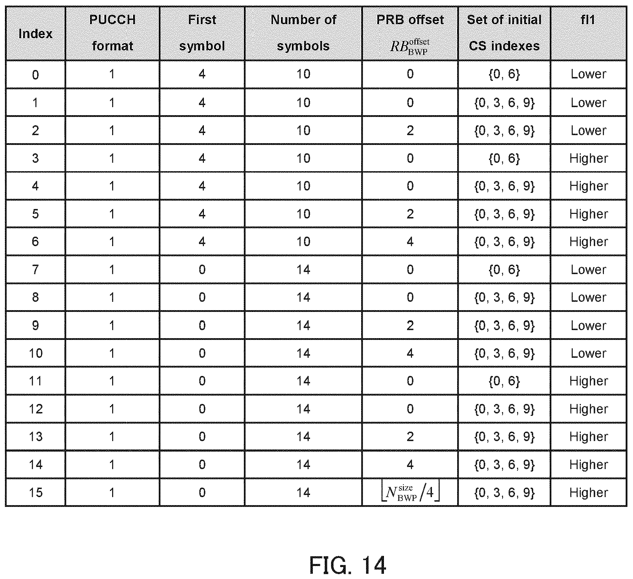

FIG. 14 illustrates an exemplary table dedicated to the RedCap terminal. A cell-specific PUCCH resource provided by the table dedicated to the RedCap terminal illustrated in FIG. 14 is different from a cell-specific PUCCH resource provided by the table (e.g., FIG. 1) for a non-RedCap mobile station. For example, a larger number of parameters (or PUCCH format 1) having larger numbers of symbols may be configured in the table illustrated in FIG. 14 than in the table illustrated in FIG. 1.

For example, the table illustrated in FIG. 14 may be configured to have a larger number of indexes giving the number of symbols=14 or 10 than the table illustrated in FIG. 1. This increases the probability that a PUCCH having longer symbols is configured for a RedCap terminal whose capability is limited compared to a non-RedCap terminal, which enhances reception performance of signals transmitted from the RedCap terminal.

Alternatively, a larger number of parameters (or PUCCH format 0) having smaller numbers of symbols may be configured in the cell-specific PUCCH resource provided by the table for a RedCap terminal than in the cell-specific PUCCH resource provided by the table for a non-RedCap terminal. This can reduce overhead of resources used by the RedCap terminal.

It should be noted that the association between the combination of the parameters on a cell-specific PUCCH resource and the index identifying each combination is not limited to the information in the table format as illustrated in FIGS. 13 and 14, and may be information in another format.

(Variation 5)

In the embodiment of the present disclosure, a case has been exemplarily described in which the frequency resource of a cell-specific PUCCH for a RedCap terminal is determined with reference to the frequency position of BWP for a non-RedCap terminal, but the present disclosure is not limited thereto. For example, the frequency resource of the cell-specific PUCCH for the RedCap terminal may be determined with reference to the frequency position of BWP for the RedCap terminal.

For example, in the case where the frequency resource of the cell-specific PUCCH for the RedCap terminal is determined with reference to the frequency position of BWP for the RedCap terminal, one PRB may be configured in a certain slot as in FIG. 10, or a plurality of PRBs may be respectively configured in different slots as in FIG. 11.

Further, in this case, terminal 200 may receive information on the frequency position of BWP for the RedCap terminal from base station 100, for example.

(Variation 6)

The combination of T1+F1 has been described in Operation Example 1, and the combination of T2+F2 has been described in Operation Example 2, but the present disclosure is not limited thereto, and any one of T1, T2, F1, and F2 or another combination may be applied.

For example, by a combination of T1+F2, a plurality of PRBs in one slot may be configured for a PUCCH resource used by terminal 200. For example, in slot n+t1, base station 100 and terminal 200 may configure two PRBs apart from the edges of the band included in the uplink BWP of the non-RedCap terminal by $RB_{BWP}^{offset}+f2$ for the PUCCH resource used by terminal 200.

Further, for example, by a combination of T2+F1, one PRB in each of a plurality of slots may be configured for the PUCCH resource used by terminal 200. For example, in each of a plurality of slots (e.g., slot n+t2 and slot n+t3), base station 100 and terminal 200 may configure one PRB apart from either one of PRBs of the band included in the uplink BWP of the non-RedCap terminal by $RB_{BWP}^{offset}+f2$ for the PUCCH resource used by terminal 200.

Alternatively, a combination of T2+F1+F2 may be used, for example. For example, in some of a plurality of slots used by terminal 200, two PRBs apart from respective PRBs at the edges of the band included in the uplink BWP of the non-RedCap terminal by $RB_{BWP}^{offset}+f2$ may be used, and in the remaining slots of the plurality of slots used by terminal 200, either one of the two PRBs apart from PRBs at the edges of the band included in the uplink BWP of the non-RedCap terminal by $RB_{BWP}^{offset}+f2$ may be used.

Alternatively, any one of T1, T2, F1, and F2 may be applied. For example, when T1 or T2 is applied, the frequency resource (e.g., PRB) of PUCCH may be the same as the resource of the cell-specific PUCCH resource set. Similarly, for example, when F1 or F2 is applied, the time resource (e.g., slot) of PUCCH may be the same as the resource of the cell-specific PUCCH resource set.

Configuring a PUCCH resource used by terminal 200 in such a manner can enhance flexibility of PUCCH resource allocation.

Note that the configuration (e.g., the above-described T1, T2, F1, and F2) of the PUCCH resource for the RedCap terminal may be switchable.

The variations have been each described, thus far.

(Terminal Type and Identification)

The above-described embodiments may be applied to, for example, a "RedCap terminal" or a non RedCap terminal.

Note that the RedCap terminal may be, for example, a terminal having at least one of the following characteristics (in other words, attributes or capabilities).

(1) A terminal that indicates (e.g., report), to base station 100, that the terminal is "a terminal targeted for coverage enhancement," "a terminal that receives a signal repeatedly transmitted", or "a RedCap terminal." Note that, for the above-described indication (report), an uplink channel such as a PRACH and a PUSCH or an uplink signal such as a Sounding Reference Signal (SRS) may be used, for example.

(2) A terminal having at least one of the following capabilities, or a terminal reporting at least one of the following capabilities to base station 100. Note that, for the above-described report, an uplink channel such as a PRACH and a PUSCH or an uplink signal such as a UCI or an SRS may be used, for example.

■ A terminal whose supportable frequency bandwidth is equal to or less than a threshold value (e.g., 20 MHz, 40 MHz, or 100 MHz)

■ A terminal in which the number of implemented reception antennae is equal to or less than a threshold value (e.g., threshold = 1)

■ A terminal in which the number of supportable downlink ports (e.g., the number of reception antenna ports) is equal to or less than a threshold value (e.g., threshold value = 2)

■ A terminal in which the number of supportable number of transmission ranks (e.g., the number of maximum Multiple-Input Multiple-Output (MIMO) layers (or the number of ranks) is equal to or less than a threshold value (e.g., threshold value = 2)

■ A terminal capable of transmitting and receiving a signal in a frequency band equal to or higher than a threshold value (e.g., Frequency Range 2 (FR2) or a band equal to or higher than 52 GHz)

■ A terminal whose processing time is equal to or longer than a threshold value

■ A terminal in which the available transport block size (TBS) is equal to or less than a threshold value

■ A terminal in which the number of available transmission ranks (e.g., the number of MIMO transmission layers) is equal to or less than a threshold value.

■ A terminal whose available modulation order is equal to or less than a threshold value

■ A terminal in which the number of available Hybrid Automatic Repeat request (HARQ) processes is equal to or less than a threshold value

■ A terminal that supports Rel-17 NR or later release

(3) A terminal to which a parameter corresponding to a RedCap mobile station is indicated from base station 100. Note that the parameter corresponding to the RedCap mobile station may include, for example, a parameter such as a Subscriber Profile ID for RAT/Frequency Priority (SPID).

Note that the "non RedCap terminal" may mean, for example, a terminal that supports Rel-15/16 (e.g., a terminal that does not support Rel-17) or a terminal that does not have the above-described characteristics even though the terminal supports Rel-17.

(Signal/Channel Type)

Note that, in the above-described embodiments, resource allocation for an uplink channel and signal (e.g., PUCCH) has been described, but the above-described embodiments may be applied to a downlink channel and signal (e.g., any of PUCCH, PUSCH, and PRACH) or another uplink channel and signal (e.g., any of PUSCH and PRACH).

Further, in the above embodiments, an example has been described in which the resource for the data signal (e.g., PDSCH or PUSCH) is assigned to terminal 200 by the PDCCH (e.g., downlink control information), but the present disclosure is not limited thereto, and may be configured by a higher layer signal, for example.

Furthermore, the PDCCH may be transmitted, for example, in either Common Search Space (CSS) or UE Specific Search Space (USS).

Further, in the embodiments of the present disclosure, a method has been exemplarily described in which a PUCCH resource for a RedCap terminal is configured based on a configuration of a cell-specific PUCCH resource set, but in the embodiments of the present disclosure, the PUCCH resource for a RedCap terminal is not limited to be based on the cell-specific PUCCH resource set, and may be based on another resource configuration. Further, in the embodiments of the present disclosure, the PUCCH resource configuration method has been described as an example, but the target for the resource configuration is not limited to PUCCH, and may be another channel or signal.

Further, parameter values applied in the description of the above-described embodiment, such as the number of slots, the number of PRBs, PRB offset, the number of symbols, PUCCH format, CS value, and a value of $r_{PUCCH}$, are merely examples, and may be other values.

Further, any component termed with a suffix, such as "-er," "-or," or "-ar" in the above-described embodiments may be replaced with other terms such as "circuit (circuitry)," "device," "unit," or "module."

(Supplement)

Information indicating whether terminal 200 supports the functions, operations, or processes described in the above-described embodiments may be transmitted (or indicated) from terminal 200 to base station 100 as capability information or a capability parameter of terminal 200.

The capability information may include an information element (IE) individually indicating whether terminal 200 supports at least one of the functions, operations, or processes described in the above-described embodiments. Alternatively, the capability information may include an information element indicating whether terminal 200 supports a combination of any two or more of the functions, operations, or processes described in the above-described embodiments, modifications, and supplements.

Base station 100 may determine (or assume) the function, operation, or process supported (or not supported) by terminal 200 of the transmission source of the capability information, based on the capability information received from terminal 200, for example. Base station 100 may perform an operation, processing, or control corresponding to a determination result based on the capability information. For example, base station 100 may control the allocation (in other words, scheduling) of at least one of an uplink resource such as a PUCCH, based on the capability information received by terminal 200.

Note that the fact that terminal 200 does not support some of the functions, operations, or processes described in the above-described embodiments may be read as that some of the functions, operations, or processes are limited in terminal 200. For example, information or a request on such limitation may be indicated to base station 100.

Information on the capability or limitation of terminal 200 may be defined, for example, in the standard, or may be implicitly indicated to base station 100 in association with information known to base station 100 or information transmitted to base station 100.

(Control Signal)

In the present disclosure, the downlink control signal (or downlink control information) relating to the exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or Radio Resource Control (RRC) in a higher layer. Further, the signal (or information) is not limited to that notified by the downlink control signal, but may be predefined in the specifications (or standard) or may be pre-configured for the base station and the terminal.

In the present disclosure, the uplink control signal (or uplink control information) relating to the exemplary embodiment of the present disclosure may be, for example, a signal (or information) transmitted in a PUCCH of the physical layer or a signal (or information) transmitted in the MAC CE or RRC of the higher layer. In addition, the signal (or information) is not limited to a case of being indicated by the uplink control signal and may be previously specified by the specifications (or standards) or may be previously configured in a base station and a terminal. Further, the uplink control signal may be replaced with, for example, uplink control information (UCI), 1st stage sidelink control information (SCI), or 2nd stage SCI.

(Base Station)

In the above embodiments, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in side link communication, a terminal may play a role of a base station. Furthermore, instead of the base station, a relay apparatus that relays communication between a higher node and a terminal may be used. Moreover, a road side device may be used.

(Uplink/Downlink/Sidelink)

An exemplary embodiment of the present disclosure may be applied to, for example, any of an uplink, a downlink, and a sidelink. For example, an exemplary embodiment of the present disclosure may be applied to an uplink Physical Uplink Shared Channel (PUSCH), Physical Uplink Control Channel (PUCCH), or Physical Random Access Channel (PRACH), a downlink Physical Downlink Shared Channel (PDSCH), PDCCH, or Physical Broadcast Channel (PBCH), or a sidelink Physical Sidelink Shared Channel (PSSCH), Physical Sidelink Control Channel (PSCCH), or Physical Sidelink Broadcast Channel (PSBCH).

Note that the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a side link control channel and a side link data channel, respectively. Further, the PBCH and PSBCH are examples of a broadcast channel, and the PRACH is an example of a random access channel.

(Data channel/Control channel)

An exemplary embodiment of the present disclosure may be applied to, for example, any of a data channel and a control channel. For example, a channel in an exemplary embodiment of the present disclosure may be replaced with any one of the PDSCH, the PUSCH, and the PSSCH being the data channels, or the PDCCH, the PUCCH, the PBCH, the PSCCH, and the PSBCH being the control channels.

(Reference Signal)

In an exemplary embodiment of the present disclosure, a reference signal is a signal known to both a base station and a mobile station and may also be referred to as a reference signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

(Time Intervals)

In an embodiment of the present disclosure, time resource units are not limited to one or a combination of slots and symbols, and may be time resource units, such as frames, superframes, subframes, slots, time slot subslots, minislots, or time resource units, such as symbols, orthogonal frequency division multiplexing (OFDM) symbols, single carrier-frequency division multiplexing access (SC-FDMA) symbols, or other time resource units. The number of symbols included in one slot is not limited to any number of symbols exemplified in the embodiments described above, and may be other numbers of symbols.

(Frequency Band)

An exemplary embodiment of the present disclosure may be applied to either a licensed band or an unlicensed band (unlicensed spectrum, shared spectrum). A channel access procedure (Listen Before Talk (LBT), carrier sense, and/or Channel Clear Assessment (CCA)) may be performed prior to transmission of each signal.

(Communication)

An exemplary embodiment of the present disclosure may be applied to any of communication between a base station and a terminal (Uu link communication), communication between a terminal and a terminal (Sidelink communication), and communication of a Vehicle to Everything (V2X). For example, the channel in an exemplary embodiment of the present disclosure may be replaced with the PSCCH, the PSSCH, the Physical Sidelink Feedback Channel (PSFCH), the PSBCH, the PDCCH, the PUCCH, the PDSCH, the PUSCH, or the PBCH.

Further, an exemplary embodiment of the present disclosure may be applied to either terrestrial networks or a non-terrestrial network (NTN) such as communication using a satellite or a high-altitude pseudolite (High Altitude Pseudo Satellite (HAPS)). Further, an exemplary embodiment of the present disclosure may be applied to a terrestrial network having a large transmission delay compared to the symbol length or slot length, such as a network with a large cell size and/or an ultra-wideband transmission network.

(Antenna Port)

In an exemplary embodiment of the present disclosure, the antenna port refers to a logical antenna (antenna group) configured of one or more physical antennae. For example, the antenna port does not necessarily refer to one physical antenna and may refer to an array antenna or the like configured of a plurality of antennae. In one example, the number of physical antennae configuring the antenna port need not be specified, and the antenna port may be specified as the minimum unit with which a terminal station can transmit a Reference signal. Moreover, the antenna port may be specified as the minimum unit for multiplying a weight of a Precoding vector.

<5G NR System Architecture and Protocol Stacks>

3GPP has been working at the next release for the 5th generation cellular technology, simply called 5G, including the development of a new radio (NR) access technology operating in frequencies ranging up to 100 GHz. The first version of 5G standard was initially delivered in late 2017, which allows proceeding to trials and commercial deployments of 5G NR standard-compliant terminals, e.g., smartphones.

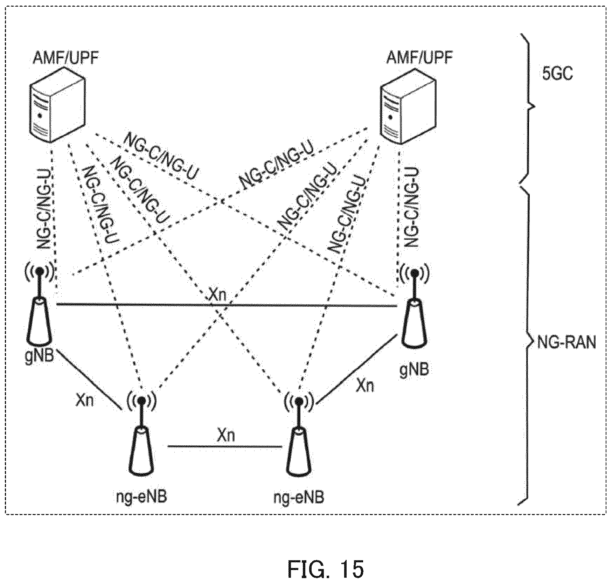

For example, the overall system architecture assumes a Next Generation-Radio Access Network (NG-RAN) that includes gNBs. The gNBs provide the NG-radio access user plane (SDAP/PDCP/RLC/MAC/PHY) and control plane (RRC) protocol terminations towards a UE. The gNBs are interconnected with each other via an Xn interface. The gNBs are also connected to the Next Generation Core (NGC) via the Next Generation (NG) interface, more specifically to the Access and Mobility Management Function (AMF; e.g. a particular core entity performing the AMF) via the NG-C interface, and to the User Plane Function (UPF; e.g., a particular core entity performing the UPF) via the NG-U interface. The NG-RAN architecture is illustrated in FIG. 15 (see, e.g., 3GPP TS 38.300 v15.6.0, section 4).

The user plane protocol stack for NR (see, e.g., 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new access stratum (AS) sublayer (Service Data Adaptation Protocol: SDAP) is introduced above the PDCP (see, e.g., clause 6.5 of 3GPP TS 38.300). A control plane protocol stack is also defined for NR (see, e.g., TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For example, the Medium-Access-Control layer handles logical-channel multiplexing, and scheduling and scheduling-related functions, including handling of different numerologies.

The physical layer (PHY) is, for example, responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), massive machine type communication (mMTC), which have diverse requirements in terms of data rates, latency, and coverage. For example, the eMBB is expected to support peak data rates (20 Gbps for downlink and 10 Gbps for uplink) and user-experienced data rates in the order of three times what is offered by IMT-Advanced. Meanwhile, in a case of the URLLC, the tighter requirements are put on ultra-low latency (0.5 ms for each of UL and DL for user plane latency) and high reliability (1-10-5 within 1 ms). Finally, the mMTC may preferably require high connection density (1,000,000 devices/km$^2$ in an urban environment), large coverage in harsh environments, and extremely long-life battery for low cost devices (15 years).

Thus, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (also referred to as TTI) than an mMTC service. Furthermore, deployment scenarios with large channel delay spreads may preferably require a longer CP duration than scenarios with short delay spreads. The subcarrier spacing may be optimized accordingly to retain the similar CP overhead. NR may support more than one value of subcarrier spacing. Correspondingly, subcarrier spacing of 15 kHz, 30 kHz, 60 kHz ... are currently considered. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR, for each numerology and carrier, a resource grid of subcarriers and OFDM symbols is defined for each of uplink and downlink. Each element in the resource grid is called a resource element and is identified based on the frequency index in the frequency domain and the symbol position in the time domain (see 3GPP TS 38.211 v15.6.0).

<5G NR Functional Split between NG-RAN and 5GC>

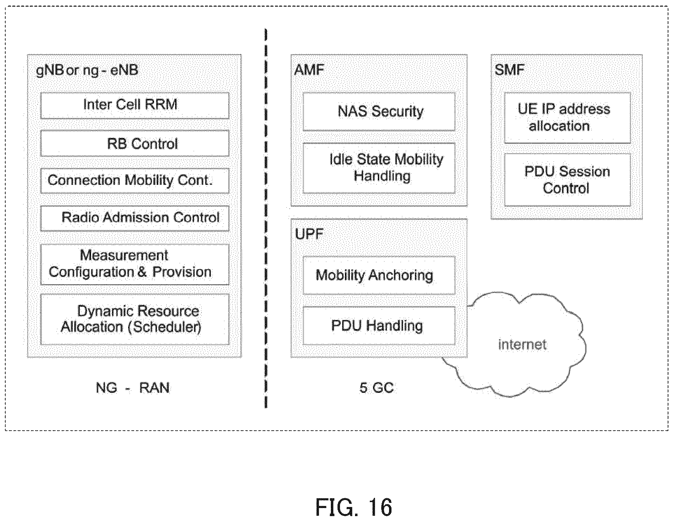

FIG. 16 illustrates functional split between NG-RAN and 5GC. An NG-RAN logical node is a gNB or ng-eNB. The 5GC has logical nodes AMF, UPF, and SMF.

For example, the gNB and ng-eNB host the following main functions:

■ Functions for radio resource management such as radio bearer control, radio admission control, connection mobility control, dynamic allocation of resources to UEs in both uplink and downlink (scheduling);
■ IP header compression, encryption, and integrity protection of data;
■ Selection of an AMF at UE attachment when no routing to an AMF can be determined from the information provided by the UE;
■ Routing of user plane data towards UPF(s);
■ Routing of control plane information towards AMF;
■ Connection setup and release;
■ Scheduling and transmission of paging messages;
■ Scheduling and transmission of system broadcast information (originated from the AMF or Operation, Admission, Maintenance (OAM));
- Measurement and measurement reporting configuration for mobility and scheduling;
- Transport level packet marking in the uplink;
- Session management;
- Support of network slicing;
- QoS Flow management and mapping to data radio bearers;
- Support of UEs in RRC_INACTIVE state;
- Distribution function for NAS messages;
- Radio access network sharing;
- Dual Connectivity; and
- Tight interworking between NR and E-UTRA.

The access and mobility management function (AMF) hosts the following main functions:

- Non-Access Stratum (NAS) signaling termination function;
- NAS signaling security;
- Access Stratum (AS) security control;
- Inter Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

Furthermore, the user plane function (UPF) hosts the following main functions:

- Anchor point for intra-/inter-RAT mobility (when applicable);
- External protocol data unit (PDU) session point of interconnect to a data network;
- Packet routing and forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane (e.g. packet filtering, gating, and UL/DL rate enforcement);
- Uplink traffic verification (SDF to QoS flow mapping); and
- Downlink packet buffering and downlink data indication triggering.

Finally, the session management function (SMF) hosts the following main functions:

- Session management;
- UE IP address allocation and management;
- Selection and control of UPF;
- Configuration function of traffic steering at a user plane function (UPF) to route traffic to proper destination;
- Control part of policy enforcement and QoS; and
- Downlink data indication.

<RRC Connection Setup and Reconfiguration Procedures>

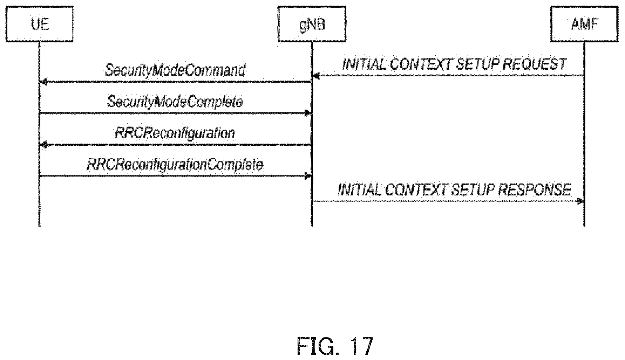

FIG. 17 illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. This transition involves that the AMF prepares the UE context data (including, for example, PDU session context, security key, UE radio capability, and UE security capabilities, etc.) and transmits the UE context data to the gNB with an INITIAL CONTEXT SETUP REQUEST. Then, the gNB activates the AS security with the UE, which is performed by the gNB transmitting a SecurityModeCommand message to the UE and by the UE responding to the gNB with a SecurityModeComplete message. Afterwards, the gNB performs the reconfiguration to set up the Signaling Radio Bearer 2 (SRB2) and Data Radio Bearer(s) (DRB(s)) by transmitting an RRCReconfiguration message to the UE and, in response, receiving an RRCReconfigurationComplete from the UE. For a signaling-only connection, the steps relating to the RRCReconfiguration are skipped since the SRB2 and DRBs are not setup. Finally, the gNB indicates to the AMF that the setup procedure is completed with an INITIAL CONTEXT SETUP RESPONSE.

In the present disclosure, thus, an entity (e.g., AMF, SMF, etc.) of the 5th Generation Core (5GC) is provided that includes control circuitry, which, in operation, establishes a Next Generation (NG) connection with a gNodeB, and a transmitter, which in operation, transmits an initial context setup message, via the NG connection, to the gNodeB to cause a signaling radio bearer setup between the gNodeB and user equipment (UE). In particular, the gNodeB transmits a radio resource control (RRC) signaling containing a resource allocation configuration information element (IE) to the UE via the signaling radio bearer. The UE then performs an uplink transmission or a downlink reception based on the resource allocation configuration.

Usage Scenarios of IMT for 2020 and beyond>

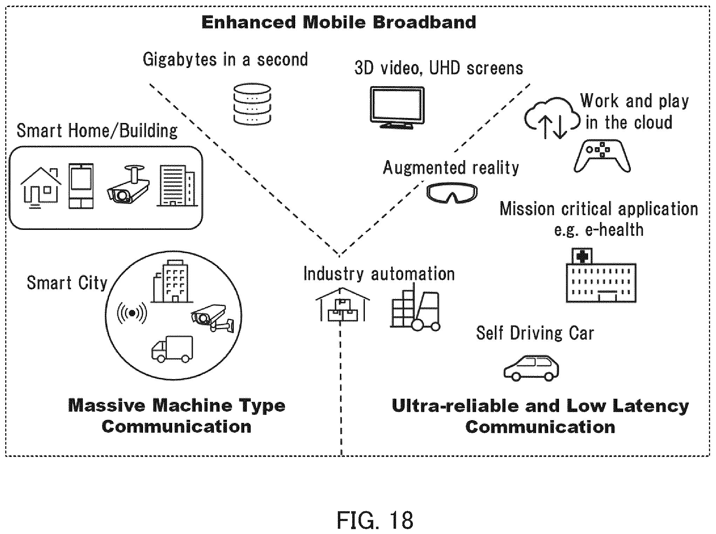

FIG. 18 illustrates some of the use cases for 5G NR. In the 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 18 illustrates some examples of envisioned usage scenarios for IMT for 2020 and beyond (see, e.g., ITU-R M. 2083 FIG. 2).

The URLLC use case has stringent requirements for capabilities such as throughput, latency, and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by identifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of the mMTC (massive machine type communication) is characterized by a very large number of connected devices typically transmitting a relatively low volume of non-delay sensitive data. Devices are required to be low cost and to have a very long battery life. From the NR perspective, utilizing very narrow bandwidth parts is one possible solution to have power saving from the UE perspective and enable the long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10-6 level), higher availability, packet size of up to 256 bytes, time synchronization down to the order of a few $\mu$s where the value can be one or a few $\mu$s depending on frequency range and short latency in the order of 0.5 to 1 ms (e.g., target user plane latency of 0.5 ms) depending on the use cases.

Moreover, for NR URLLC, several technology enhancements from the physical layer perspective have been identified. These technology enhancements include Physical Downlink Control Channel (PDCCH) enhancements related to compact DCI, PDCCH repetition, and increased PDCCH monitoring. In addition, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements have been identified. The term "mini-slot" refers to a transmission time interval (TTI) including a smaller number of symbols than a slot (a slot includes fourteen symbols).

<QoS Control>

The 5G Quality of Service (QoS) model is based on QoS flows and supports both QoS flows that require guaranteed flow bit rate (GBR QoS flows) and QoS flows that do not require guaranteed flow bit rate (non-GBR QoS Flows). At the NAS level, the QoS flow is thus the finest granularity of QoS differentiation in a PDU session. A QoS flow is identified within a PDU session by a QoS flow ID (QFI) carried in an encapsulation header over the NG-U interface.

For each UE, the 5GC establishes one or more PDU sessions. For each UE, the NG-RAN establishes at least one Data Radio Bearer (DRB) together with the PDU session, for example as illustrated above with reference to FIG. 17. Additional DRB(s) for QoS flow(s) of that PDU session can be subsequently configured (it is up to NG-RAN when to do so). The NG-RAN maps packets belonging to different PDU sessions to different DRBs. NAS level packet filters in the UE and 5GC associate UL and DL packets with QoS flows, whereas AS-level mapping rules in the UE and in the NG-RAN associate UL and DL QoS flows with DRBs.

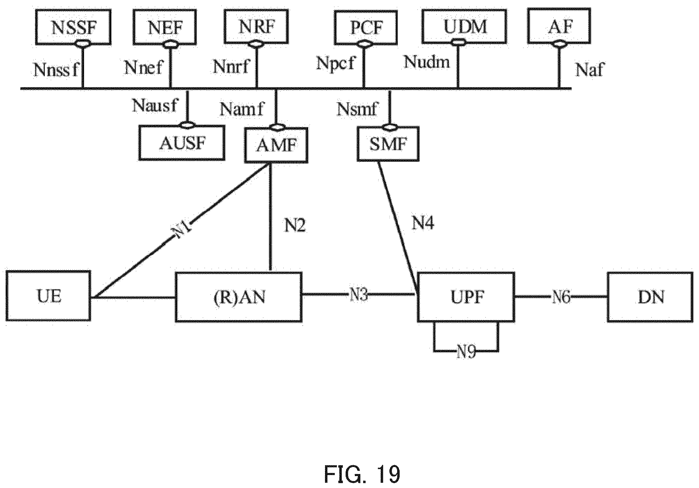

FIG. 19 illustrates a 5G NR non-roaming reference architecture (see TS 23.501 v16.1.0, section 4.23). An Application Function (AF, e.g., an external application server hosting 5G services exemplified in FIG. 18) interacts with the 3GPP core network in order to provide services, for example, to support application influence on traffic routing, accessing a Network Exposure Function (NEF) or interacting with the policy framework for policy control (see Policy Control Function, PCF), e.g., QoS control. Based on operator deployment, application functions considered to be trusted by the operator can be allowed to interact directly with relevant network functions. Application functions not allowed by the operator to access directly the network functions use the external exposure framework via the NEF to interact with relevant network functions.

FIG. 19 illustrates further functional units of the 5G architecture, namely a Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (e.g., AF of the 5G architecture), is provided that includes a transmitter, which in operation, transmits a request containing a QoS requirement for at least one of the URLLC, eMMB, and mMTC services to at least one of functions (for example NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. The technique of implementing an integrated circuit is not limited to the LSI, however, and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to an embodiment of the present disclosure includes: control circuitry, which, in operation, configures, based on information on a configuration of a first resource for a first type terminal, a second resource different from the first resource for a second type terminal; and transmission circuitry, which, in operation, transmits a signal in the second resource.

In the embodiment of the present disclosure, the control circuitry configures the second resource based on the information on the configuration and information on a difference between the first resource and the second resource.

In the embodiment of the present disclosure, the second resource includes one resource block configured based on the difference and a resource block configured at one of edges in a bandwidth part allocated for the first type terminal.

In the embodiment of the present disclosure, the second resource includes a plurality of certain resource blocks configured based on the difference and each of a plurality of first resource blocks included in the first resource, the plurality of certain resource blocks being referred to as a plurality of second resource blocks.

In the embodiment of the present disclosure, the plurality of second resource blocks is configured in different slots from one another.

In the embodiment of the present disclosure, the second resource includes one or a plurality of certain slots configured based on the difference and a first slot included in the first resource, the plurality of certain slots being referred to as a plurality of second slots.

In the embodiment of the present disclosure, the transmission circuitry repeatedly transmits the signal by using the plurality of second slots.

In the embodiment of the present disclosure, a size of at least one of a time domain and/or a frequency domain for each slot in the second resource is different from a size of a hop in a slot in the first resource.

In the embodiment of the present disclosure, a value of a cyclic shift corresponding to the second resource is a value obtained by adding an offset to a value of a cyclic shift configured in the first resource.

In the embodiment of the present disclosure, a candidate for a combination of parameters and information identifying the candidate are associated with each other, the parameters including both the information on the configuration and information on the second resource.

A base station according to an embodiment of the present disclosure includes: control circuitry, which, in operation, configures, based on information on a configuration of a first resource for a first type terminal, a second resource different from the first resource for a second type terminal; and reception circuitry, which, in operation, receives a signal in the second resource.

In a communication method according to an embodiment of the present disclosure, a terminal configures, based on information on a configuration of a first resource for a first type terminal, a second resource different from the first resource for a second type terminal, and transmits a signal in the second resource.

In a communication method according to an embodiment of the present disclosure, a base station configures, based on information on a configuration of a first resource for a first type terminal, a second resource different from the first resource for a second type terminal, and receives a signal in the second resource.

The disclosure of Japanese Patent Application No. 2021-129188, filed on August 5, 2021, including the specification, drawings and abstract, is incorporated herein by reference in its entirety.

Industrial Applicability

An exemplary embodiment of the present disclosure is useful for radio communication systems.

Reference Signs List

100 Base station
101,206 Controller
102 DCI generator
103 Higher layer signal generator
104, 208 Encoder/Modulator
105, 209 Signal mapper
106, 210 Transmitter
107, 201 Antenna
108, 202 Receiver
109 Signal separator
110, 205 Demodulator/decoder
200 Terminal
203 Signal separator
204 DCI detector
207 PUCCH sequence generator

**Claims**

**1.** A terminal, comprising:

control circuitry, which, in operation, configures, based on information on a configuration of a first resource for a first type terminal, a second resource different from the first resource for a second type terminal; and
transmission circuitry, which, in operation, transmits a signal in the second resource.

**2.** The terminal according to claim 1, wherein
the control circuitry configures the second resource based on the information on the configuration and information on a difference between the first resource and the second resource.

**3.** The terminal according to claim 2, wherein
the second resource includes one resource block configured based on the difference and a resource block configured at one of edges in a bandwidth part allocated for the first type terminal.

**4.** The terminal according to claim 2, wherein
the second resource includes a plurality of certain resource blocks configured based on the difference and each of a plurality of first resource blocks included in the first resource, the plurality of certain resource blocks being referred to as a plurality of second resource blocks.

**5.** The terminal according to claim 4, wherein
the plurality of second resource blocks is configured in different slots from one another.

**6.** The terminal according to claim 2, wherein
the second resource includes one or a plurality of certain slots configured based on the difference and a first slot included in the first resource, the plurality of certain slots being referred to as a plurality of second slots.

**7.** The terminal according to claim 6, wherein
the transmission circuitry repeatedly transmits the signal by using the plurality of second slots.

**8.** The terminal according to claim 1, wherein
a size of at least one of a time domain and/or a frequency domain for each slot in the second resource is different from a size of a hop in a slot in the first resource.

**9.** The terminal according to claim 1, wherein
a value of a cyclic shift corresponding to the second resource is a value obtained by adding an offset to a value of a cyclic shift configured in the first resource.

10. The terminal according to claim 1, wherein
a candidate for a combination of parameters and information identifying the candidate are associated with each other, the parameters including both the information on the configuration and information on the second resource.

11. Abase station, comprising:

control circuitry, which, in operation, configures, based on information on a configuration of a first resource for a first type terminal, a second resource different from the first resource for a second type terminal; and
reception circuitry, which, in operation, receives a signal in the second resource.

12. A communication method, comprising:

configuring, by a terminal, based on information on a configuration of a first resource for a first type terminal, a second resource different from the first resource for a second type terminal; and
transmitting, by the terminal, a signal in the second resource.

13. A communication method, comprising:

configuring, by a base station, based on information on a configuration of a first resource for a first type terminal, a second resource different from the first resource for a second type terminal; and
receiving, by the base station, a signal in the second resource.

PUCCH resource sets before dedicated PUCCH resource configuration

| Index | PUCCH format | First symbol | Number of symbols | PRB offset $RB_{BWP}^{offset}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\lfloor N_{BWP}^{size}/4 \rfloor$ | {0, 3, 6, 9} |

FIG. 1

EP 4 383 772 A1

FIG. 2

non-RedCap
(cell-specific PUCCH configuration)

UL BWP for non-RedCap

| 8-11 | 0-3 |
| 12-15 | 4-7 |

| 4-7 | 12-15 |
| 0-3 | 8-11 |

Slot n

RedCap

UL BWP for RedCap

| 8-11 | 0-3 |
| 12-15 | 4-7 |

| 4-7 | 12-15 |
| 0-3 | 8-11 |

Slot n

FIG. 3

FIG. 4

100

101

108

CONTROLLER

RECEIVER

FIG. 5

200

206

210

CONTROLLER

TRANSMITTER

FIG. 6

100

107

DOWNLINK DATA ──→ 104 ENCODER/ MODULATOR ──→ 105 SIGNAL MAPPER ──→ 106 TRANSMITTER

HIGHER LAYER SIGNAL

DCI

103 HIGHER LAYER SIGNAL GENERATOR

102 DCI GENERATOR

INDICATION OF DCI GENERATION

INDICATION OF GENERATION OF HIGHER LAYER SIGNAL

101 CONTROLLER

PUCCH SEQUENCE

110 DEMODULATOR/ DECODER

109 SIGNAL SEPARATOR

108 RECEIVER

UPLINK DATA

SIGNAL ON PUSCH RESOURCE

FIG. 7

FIG. 8

BASE STATION
100

TERMINAL
200

S101

SYSTEM INFORMATION AND PDCCH

S102

IDENTIFY cell-specific PUCCH
RESOURCE SET AND $r_{PUCCH}$

S103

DETERMINE PUCCH RESOURCE SET
USED BY TERMINAL 200

S104

PUCCH

FIG. 9

FIG. 10

non-RedCap: 2RB per UE

$RB_{BWP}^{offset}$

| 8-11 | 0-3 |
| 12-15 | 4-7 |

UL BWP for non-RedCap

| 4-7 | 12-15 |
| 0-3 | 8-11 |

$RB_{BWP}^{offset}$

Slot n

RedCap: 1RB per UE
(fl1 = lower)

UL BWP for non-RedCap

| 4-7 | 12-15 |
| 0-3 | 8-11 |

$RB_{BWP}^{offset} + f1$

Slot n + t1

RedCap: 1RB per UE
(fl1 = higher)

UL BWP for non-RedCap

$RB_{BWP}^{offset} + f1$

| 8-11 | 0-3 |
| 12-15 | 4-7 |

Slot n + t1

EP 4 383 772 A1

non-RedCap: 1 slot

RedCap: multiple slots

$RB_{BWP}^{offset}$

$RB_{BWP}^{offset} + f2$

UL BWP for non-RedCap

UL BWP for non-RedCap

| 8-11 | 0-3 |
| 12-15 | 4-7 |

| 4-7 | 12-15 |
| 0-3 | 8-11 |

| 4-7 | 12-15 |
| 0-3 | 8-11 |

| 4-7 | 12-15 |
| 0-3 | 8-11 |

$RB_{BWP}^{offset}$

$RB_{BWP}^{offset} + f2$

Slot n

Slot n + t2

Slot n + t3

FIG. 11

FIG. 12

| Index | PUCCH format | First symbol | Number of symbols | PRB offset $RB_{BWP}^{offset}$ | Set of initial CS indexes | fl1 |
|---|---|---|---|---|---|---|
| 0 | 0 | 12 | 2 | 0 | {0, 3} | Lower |
| 1 | 0 | 12 | 2 | 0 | {0, 4, 8} | Lower |
| 2 | 0 | 12 | 2 | 3 | {0, 4, 8} | Higher |
| 3 | 1 | 10 | 4 | 0 | {0, 6} | Lower |
| 4 | 1 | 10 | 4 | 0 | {0, 3, 6, 9} | Lower |
| 5 | 1 | 10 | 4 | 2 | {0, 3, 6, 9} | Higher |
| 6 | 1 | 10 | 4 | 4 | {0, 3, 6, 9} | Higher |
| 7 | 1 | 4 | 10 | 0 | {0, 6} | Lower |
| 8 | 1 | 4 | 10 | 0 | {0, 3, 6, 9} | Lower |
| 9 | 1 | 4 | 10 | 2 | {0, 3, 6, 9} | Higher |
| 10 | 1 | 4 | 10 | 4 | {0, 3, 6, 9} | Higher |
| 11 | 1 | 0 | 14 | 0 | {0, 6} | Lower |
| 12 | 1 | 0 | 14 | 0 | {0, 3, 6, 9} | Lower |
| 13 | 1 | 0 | 14 | 2 | {0, 3, 6, 9} | Higher |
| 14 | 1 | 0 | 14 | 4 | {0, 3, 6, 9} | Higher |
| 15 | 1 | 0 | 14 | $\lfloor N_{BWP}^{size}/4 \rfloor$ | {0, 3, 6, 9} | Higher |

FIG. 13

| Index | PUCCH format | First symbol | Number of symbols | PRB offset $RB_{BWP}^{offset}$ | Set of initial CS indexes | fl1 |
|---|---|---|---|---|---|---|
| 0 | 1 | 4 | 10 | 0 | {0, 6} | Lower |
| 1 | 1 | 4 | 10 | 0 | {0, 3, 6, 9} | Lower |
| 2 | 1 | 4 | 10 | 2 | {0, 3, 6, 9} | Lower |
| 3 | 1 | 4 | 10 | 0 | {0, 6} | Higher |
| 4 | 1 | 4 | 10 | 0 | {0, 3, 6, 9} | Higher |
| 5 | 1 | 4 | 10 | 2 | {0, 3, 6, 9} | Higher |
| 6 | 1 | 4 | 10 | 4 | {0, 3, 6, 9} | Higher |
| 7 | 1 | 0 | 14 | 0 | {0, 6} | Lower |
| 8 | 1 | 0 | 14 | 0 | {0, 3, 6, 9} | Lower |
| 9 | 1 | 0 | 14 | 2 | {0, 3, 6, 9} | Lower |
| 10 | 1 | 0 | 14 | 4 | {0, 3, 6, 9} | Lower |
| 11 | 1 | 0 | 14 | 0 | {0, 6} | Higher |
| 12 | 1 | 0 | 14 | 0 | {0, 3, 6, 9} | Higher |
| 13 | 1 | 0 | 14 | 2 | {0, 3, 6, 9} | Higher |
| 14 | 1 | 0 | 14 | 4 | {0, 3, 6, 9} | Higher |
| 15 | 1 | 0 | 14 | $\left\lfloor N_{BWP}^{size}/4 \right\rfloor$ | {0, 3, 6, 9} | Higher |

FIG. 14

FIG. 15

EP 4 383 772 A1

gNB or ng - eNB

Inter Cell RRM

RB Control

Connection Mobility Cont.

Radio Admission Control

Measurement Configuration & Provision

Dynamic Resource Allocation (Scheduler)

NG - RAN

AMF

NAS Security

Idle State Mobility Handling

UPF

Mobility Anchoring

PDU Handling

SMF

UE IP address allocation

PDU Session Control

internet

5 GC

FIG. 16

FIG. 17

FIG. 18

FIG. 19

## INTERNATIONAL SEARCH REPORT

| International application No. |
|---|
| **PCT/JP2022/020728** |

**A. CLASSIFICATION OF SUBJECT MATTER**

*H04W 8/22*(2009.01)i; *H04W 72/04*(2009.01)i
FI: H04W8/22; H04W72/04 131; H04W72/04 132

According to International Patent Classification (IPC) or to both national classification and IPC

**B. FIELDS SEARCHED**

Minimum documentation searched (classification system followed by classification symbols)

H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/073372 A1 (KDDI CORP.) 04 May 2017 (2017-05-04) | 1-2, 11-13 |
| | paragraphs [0016]-[0022] | |
| Y | | 4-9 |
| A | | 3, 10 |
| Y | JP 2017-520129 A (SUN PATENT TRUST) 20 July 2017 (2017-07-20) | 4-9 |
| | paragraphs [0011], [0017], [0082], [0083], [0090]-[0100] | |
| A | | 3, 10 |
| A | QUALCOMM INC, Complexity Reduction for RedCap Devices[online], 3GPP TSG-RAN WG1 Meeting #104 R1-2101766, 22 January 2021 | 1-13 |
| | section 2.1 | |
| A | WO 2019/026514 A1 (NEC CORP.) 07 February 2019 (2019-02-07) | 1-13 |
| | paragraphs [0121]-[0139], fig. 11-13 | |

☐ Further documents are listed in the continuation of Box C. ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 August 2022** | **16 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/020728**

| Patent document cited in search report | | | Publication date (day/month/year) | Patent family member(s) | | | Publication date (day/month/year) |
|---|---|---|---|---|---|---|---|
| WO | 2017/073372 | A1 | 04 May 2017 | US | 2018/0206220 | A1 | |
| | | | | paragraphs [0027]-[0033] | | | |
| | | | | EP | 3370455 | A1 | |
| | | | | CN | 108141786 | A | |
| JP | 2017-520129 | A | 20 July 2017 | US | 2017/0164335 | A1 | |
| | | | | paragraphs [0011], [0021], [0105], [0106], [0113]-[0124] | | | |
| | | | | WO | 2015/196368 | A1 | |
| | | | | EP | 3162139 | A1 | |
| | | | | CN | 106465355 | A | |
| | | | | KR | 10-2017-0020340 | A | |
| WO | 2019/026514 | A1 | 07 February 2019 | US | 2019/0200334 | A1 | |
| | | | | paragraphs [0172]-[0189], fig. 11-13 | | | |
| | | | | EP | 3664543 | A1 | |
| | | | | CN | 110959302 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021129188 A

**Non-patent literature cited in the description**

- **NTT DOCOMO.** Revised WID on New Radio Access Technology. *RP-181726,* September 2018
- **ERICSSON.** New SID on Support of Reduced Capability NR Devices. *RP-193238,* December 2019
- NR; Physical layer procedures for control (Release 16). *3GPP TS 38.213 V16.6.0,* June 2021